# DEMANDE DE BREVET EUROPEEN

(11) **EP 3 351 810 A1**
(43) Date de publication de la demande: **25.07.2018**
(21) Numéro de dépôt: 18150498.6
(22) Date de dépôt: 05.01.2018
(51) Int. Cl.: F16B 7/04

(54) **KIT D'ASSEMBLAGE POUR ASSEMBLER DEUX PROFILES ET STRUCTURE ASSEMBLEE A L'AIDE DE CE KIT D'ASSEMBLAGE**

(30) Priorité: 19.01.2017 FR 1750450
(71) Demandeur: CATTEAU, Benoît, 85140 La Merlatière (FR)
(72) Inventeur: CATTEAU, Benoît, 85140 La Merlatière (FR)
(74) Mandataire: Cabinet Chaillot

(57) **Abrégé**

Ce kit comprend un élément d'assemblage (117) présentant une première partie (118), dite rotule, configurée pour être reçue dans un premier espace de réception (113) d'un premier profilé (110), et une seconde partie (119) pour faire saillie du profilé (110). La rotule (118) a une surface externe (120) en arc de cylindre, dont une première et une seconde extrémité présentent une première (121) et une seconde (122) face d'arrêt. Le kit comprend une clé (130) ayant une surface externe (131) en arc de cylindre de même rayon que la surface (120), et des première (132) et seconde (133) faces d'appui, la clé (130) pouvant se placer dans l'intervalle entre les faces d'arrêt (121, 122), les faces d'appui (132, 133) étant en contact avec ces dernières. Des moyens d'immobilisation de la clé (130) sont prévus.

## Description

La présente invention se rapporte à un kit d'assemblage pour assembler deux profilés l'un à l'autre, ainsi qu'aux structures assemblées en utilisant les kits d'assemblage de la présente invention.

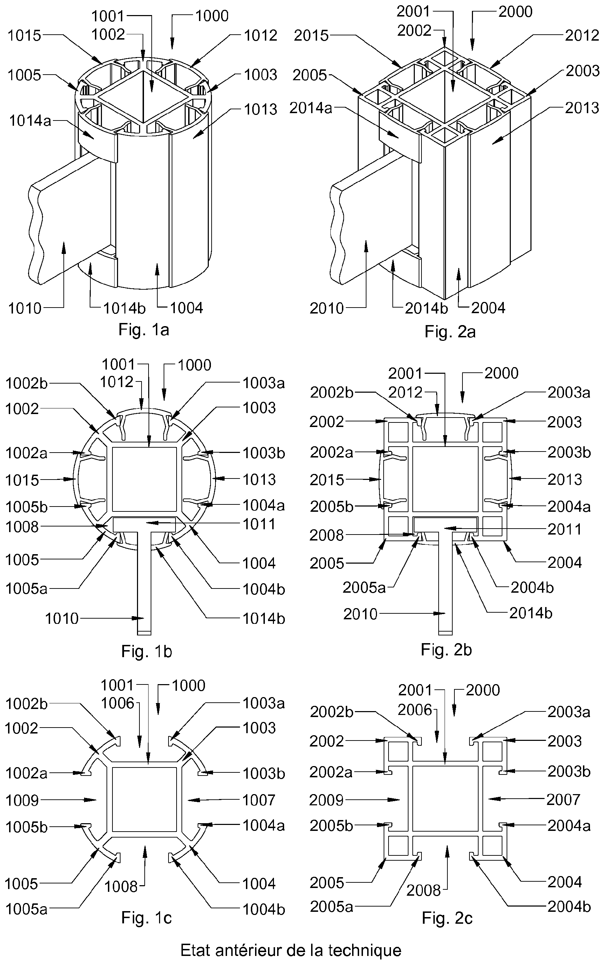

On a représenté sur les Figures 1a à 2c des profilés en aluminium de l'état antérieur de la technique.

Ces profilés qui seront dorénavant désignés « premiers profilés » peuvent être disposés à l'horizontale, à la verticale ou sont inclinés en position d'utilisation et servent chacun à établir une liaison avec un second profilé qui sera assemblé à l'un de ces premiers profilés par l'intermédiaire d'un élément de liaison.

Sur les Figures 1a à 1c, on a représenté un premier profilé de section extérieure cylindrique 1000. Le profilé 1000 possède un tube interne de section rectangulaire 1001. A partir de chaque angle du tube interne, part une jambe respectivement 1002, 1003, 1004 et 1005 qui, à son extrémité, est reliée au centre d'une partie en arc de cercle qui fait partie de la section extérieure cylindrique du premier profilé.

Des rainures 1006, 1007, 1008 et 1009 (Figure 1c) sont formées chacune entre deux jambes voisines et une paroi latérale du tube interne. Ainsi, la rainure 1006 est formée entre les jambes 1002 et 1003 ; la rainure 1007 entre les jambes 1003 et 1004 ; la rainure 1008 entre les jambes 1004 et 1005 ; et la rainure 1009 entre les jambes 1005 et 1002.

Chaque profil extérieur en arc de cercle possède à ses extrémités des protubérances s'étendant vers le tube interne 1001. Ainsi, la jambe 1002 possède les protubérances 1002a et 1002b ; la jambe 1003 les protubérances 1003a et 1003b ; la jambe 1004 les protubérances 1004a et 1004b ; et la jambe 1005 les protubérances 1005a et 1005b.

Dans chaque rainure ménagée sur toute la longueur du profilé, on peut venir insérer un té de liaison 1010. L'extrémité 1011 du té 1010 pourra venir en contact contre la paroi latérale du tube interne 1001 et les protubérances respectives de chaque jambe partant de ladite paroi interne. Par exemple, on peut insérer le té 1010 dans la rainure 1008 avec son extrémité 1011 en contact avec la paroi du tube interne et les protubérances 1004b et 1005a des jambes respectivement 1004 et 1005.

Les rainures peuvent être fermées chacune par un cache-rainure afin d'être masquées. Par exemple, si le té de liaison est inséré dans la rainure 1008, la rainure 1006 pourra être fermée par le cache-rainure 1012, la rainure 1007 par le cache-rainure 1013 et la rainure 1009 par le cache-rainure 1015. Dans le cas de la rainure 1008 on disposera des cache-rainures 1014a et 1014b respectivement au-dessus et au-dessous du té de liaison 1010.

Sur les Figures 2a à 2c, on a représenté un premier profilé de section rectangulaire 2000. Le profilé 2000 possède un tube interne de section rectangulaire 2001. A partir de chaque angle du tube interne, part un tube d'angle respectivement 2002, 2003, 2004 et 2005 de section rectangulaire.

Des rainures 2006, 2007, 2008 et 2009 (Figure 2c) sont formées chacune entre deux tubes d'angle voisins et une paroi latérale du tube interne. Ainsi, la rainure 2006 est formée entre les tubes d'angle 2002 et 2003 ; la rainure 2007 entre les tubes d'angle 2003 et 2004 ; la rainure 2008 entre les tubes d'angle 2004 et 2005 ; et la rainure 2009 entre les tubes d'angle 2005 et 2002.

Chaque tube d'angle possède deux pattes qui s'étendent vers l'espace libre des fentes. Ainsi, le tube d'angle 2002 possède les pattes 2002a et 2002b ; le tube d'angle 2003 les pattes 2003a et 2003b ; le tube d'angle 2004 les pattes 2004a et 2004b ; et le tube d'angle 2005 les pattes 2005a et 2005b.

Dans chaque rainure ménagée sur toute la longueur du profilé, on peut venir insérer un té de liaison 2010. L'extrémité 2011 du té 2010 pourra venir en contact contre la paroi latérale du tube interne 2001 et une patte respective de chaque tube d'angle partant de ladite paroi interne. Par exemple, on peut insérer le té 2010 dans la rainure 2008 avec son extrémité 2011 en contact avec la paroi du tube interne et les pattes 2004b et 2005a des tubes d'angle respectivement 2004 et 2005.

Les rainures peuvent être fermées par un cache-rainure afin de masquer ces dernières. Par exemple, si le té de liaison est inséré dans la rainure 2008, la rainure 2006 pourra être fermée par le cache-rainure 2012, la rainure 2007 par le cache-rainure 2013 et la rainure 2009 par le cache-rainure 2015. Dans le cas de la rainure 2008, on disposera des cache-rainures 2014a et 2014b respectivement au-dessus et au-dessous du té de liaison 2010.

Ces profilés à rainures possèdent plusieurs inconvénients.

Pour l'assemblage d'un second profilé à un premier profilé par un élément de liaison, ce dernier peut être glissé en bout à l'une ou l'autre des extrémités de la rainure du premier profilé, ou on peut venir insérer des éléments de liaison de face dans la rainure. Le té de liaison sera de dimension différente si l'insertion est faite en bout ou de face.

Dans le cas de l'insertion d'éléments de liaison de face, on peut venir insérer dans la rainure des petits éléments en forme de té par rotation et dont l'épaisseur ne peut pas excéder la largeur de l'ouverture de la rainure. On peut également insérer des éléments plus grands par déformation. Cependant, les petits éléments de liaison ont une résistance mécanique moindre et présentent d'importantes difficultés pour leur démontage, celui-ci étant néanmoins possible dans le cas de l'insertion d'élément de liaison par déformation. Dans ce dernier cas, le démontage de l'élément de liaison implique une déformation élastique, ce qui peut conduire à une rupture de l'élément de liaison si le démontage est répétitif.

Dans le cas du montage en bout de l'élément de liaison, les forces appliquées sur ce dernier peuvent provoquer l'ouverture de la rainure ou un glissement de l'élément de liaison dans celle-ci. L'ouverture de la rainure peut se faire du simple fait de la présence de la rainure sur toute la longueur du profilé pour n'importe quel type de liaison. Il est possible d'éviter cet inconvénient au moyen d'un élément qui va déformer ou pénétrer la matière à l'intérieur de la rainure, tel qu'une vis pointeau, par exemple. Cette solution n'est pas idéale car elle implique une déformation de la matière à l'intérieur de la rainure, voire un usinage.

Les profilés dotés de rainures présentent un poids plus lourd et une surface importante de laquage, ce qui les rendent coûteux. De plus, les profilés dotés de rainures présentent une surface qui est non lisse, inesthétique, les cavités formées par ces rainures présentant également des difficultés d'accessibilité pour leur nettoyage.

La présente invention vise à résoudre les inconvénients des profilés dotés de rainures de l'état antérieur de la technique, afin de proposer des systèmes polyvalents de liaison permettant de réaliser des liaisons de haute résistance mécanique et compatibles avec des structures de petite ou de grande dimension.

Pour surmonter ces inconvénients, l'invention propose un kit d'assemblage de profilés, comprenant au moins un premier profilé, au moins un second profilé destiné à s'étendre perpendiculairement ou selon un angle par rapport à un premier profilé et au moins un élément d'assemblage présentant une première partie configurée pour être reçue en position d'assemblage dans un premier espace de réception défini dans un premier profilé, et une seconde partie s'étendant à partir de la première partie de façon à faire saillie hors dudit premier profilé avec l'élément d'assemblage en position d'assemblage, laquelle seconde partie est configurée pour être reçue dans un second espace de réception défini à l'extrémité du second profilé, étant prévus des premiers et seconds moyens de blocage pour bloquer en position respectivement lesdites première et seconde parties dans respectivement lesdits premier et second espaces de réception,
le kit d'assemblage étant caractérisé par le fait que :
- la première partie, dite rotule, de l'élément d'assemblage a une surface externe suivant un arc de cylindre, dont une première extrémité, au voisinage de laquelle s'étend la seconde partie de l'élément d'assemblage, et une seconde extrémité présentent respectivement une première et une seconde face d'arrêt rentrante formant un angle avec ladite surface externe, et
- les premiers moyens de blocage comprennent :
   - une pièce, dite clé, ayant une surface externe suivant un arc de cylindre de même rayon que ou d'un rayon inférieur à celui suivi par la surface externe de ladite rotule, et des première et seconde faces d'appui rentrantes, respectivement à chaque extrémité de ladite surface externe de la clé, la clé étant configurée pour être apte à se placer, en position d'assemblage, dans l'intervalle formé entre les première et seconde faces d'arrêt de ladite première partie, avec les première et seconde faces d'appui de la clé en contact avec ces dernières ; et
   - des moyens d'immobilisation de la clé en position d'assemblage,
   ce par quoi l'élément d'assemblage est apte à assembler audit second profilé ledit premier profilé avec le premier espace de réception de ce dernier qui délimite un espace cylindrique recevant, en position d'assemblage, la rotule de l'élément d'assemblage et la clé, ledit espace cylindrique étant tel que les surfaces externes de ladite rotule et de ladite clé sont aptes à être guidées en rotation dans celui-ci, le premier profilé présentant une ouverture débouchant dans ledit premier espace de réception et par laquelle la seconde partie de l'élément d'assemblage s'étend hors dudit premier profilé pour être insérée dans ledit second profilé.

Conformément à un premier mode de réalisation particulier, le premier profilé est un profilé cylindrique qui délimite l'espace cylindrique de réception de la rotule et de la clé, et dans la paroi cylindrique duquel est formée l'ouverture par laquelle la seconde partie de l'élément d'assemblage s'étend hors dudit premier profilé, les dimensions de l'ouverture étant telles que l'élément d'assemblage puisse être introduit à travers celle-ci dans l'espace cylindrique de réception et ne puisse plus en être extrait une fois réalisé son assemblage avec la clé dans ledit espace, les bordures de l'ouverture perpendiculaires à la ligne longitudinale moyenne de l'espace cylindrique de réception assurant avantageusement la mise en butée de l'élément d'assemblage dans sa position de montage.

Conformément à un second mode de réalisation particulier, le premier profilé comporte des plots longitudinaux qui sont répartis sur sa paroi intérieure et dont les bordures libres sont contenues dans une enveloppe cylindrique constituant l'espace cylindrique de réception de la rotule et de la clé, l'écartement entre les deux plots situés de part et d'autre de l'ouverture étant tel que l'élément d'assemblage puisse être introduit à travers ceux-ci dans l'espace cylindrique de réception et ne puisse plus en être extrait une fois réalisé son assemblage avec la clé dans ledit espace, les bordures de l'ouverture perpendiculaires à la ligne longitudinale moyenne de l'espace cylindrique de réception assurant avantageusement la mise en butée de l'élément d'assemblage dans sa position de montage.

Les moyens d'immobilisation peuvent être des moyens de serrage configurés pour, en position d'assemblage, appliquer sur la clé une contrainte de mise en pression de cette dernière contre l'intérieur de l'espace de réception du premier profilé.

Les moyens de serrage peuvent comprendre au moins une vis placée dans un trou traversant respectif ménagé dans la rotule de l'élément d'assemblage au voisinage de ladite première extrémité, la clé présentant une troisième face d'appui qui, en position d'utilisation, est en regard dudit trou traversant et sur laquelle la au moins une vis applique la contrainte de mise en pression.

Le kit d'assemblage selon la présente invention peut comprendre de plus des moyens de maintien de la clé en position lorsque l'on vient l'assembler avec l'élément d'assemblage dans l'espace de réception intérieur du premier profilé.

Les moyens de maintien de la clé en position peuvent comprendre une entretoise configurée pour être reçue à l'intérieur de l'espace de réception du premier profilé et ayant une patte apte à venir en appui sur le bord de l'ouverture du premier profilé.

L'entretoise peut être en forme de disque dont le rayon correspond au rayon de la section circulaire de l'espace de réception intérieur du premier profilé.

La rotule de l'élément d'assemblage peut être un secteur de tube cylindrique comprenant un retour, de préférence radial, constituant la seconde face d'arrêt de ladite rotule.

La ligne longitudinale moyenne de la seconde partie de l'élément d'assemblage peut être perpendiculaire à l'axe de l'arc de cylindre de la rotule de l'élément d'assemblage.

La ligne longitudinale moyenne de la seconde partie de l'élément d'assemblage peut former un angle non droit avec l'axe de l'arc de cylindre de la rotule de l'élément d'assemblage.

L'invention porte également sur une structure caractérisée par le fait qu'elle comprend une pluralité de kits d'assemblage selon la présente invention, à l'état assemblé.

Pour mieux illustrer l'objet de la présente invention, on va en décrire ci-après, à titre indicatif et non limitatif, des modes de réalisation particuliers avec référence au dessin annexé.

Sur ce dessin :
- la Figure 1a représente une vue en perspective d'un premier profilé de section cylindrique de l'état antérieur de la technique avec un élément de liaison et des cache-rainures montés sur celui-ci ;
- la Figure 1b représente une vue en coupe transversale du profilé de la Figure la ;
- la Figure 1c représente une vue en coupe transversale du profilé de la Figure 1a sans élément de liaison ni cache-rainures ;
- la Figure 2a représente une vue en perspective d'un premier profilé de section rectangulaire de l'état antérieur de la technique avec un élément de liaison et des cache-rainures montés sur celui-ci ;
- la Figure 2b représente une vue en coupe transversale du profilé de la Figure 2a ;
- la Figure 2c représente une vue en coupe transversale du profilé de la Figure 2a sans élément de liaison ni cache-rainures ;
- la Figure 3a représente une vue en perspective d'un premier profilé de section circulaire ;
- la Figure 3b représente une vue en perspective du premier profilé de la Figure 3a, ayant une ouverture de section sensiblement rectangulaire par laquelle on a introduit un dispositif d'assemblage selon la présente invention ;
- la Figure 4a représente une vue en perspective d'un premier profilé de section rectangulaire selon l'invention ;
- la Figure 4b représente une vue en perspective du premier profilé de la Figure 4a, ayant une ouverture de section sensiblement rectangulaire par laquelle on a introduit un dispositif d'assemblage selon la présente invention ;
- la Figure 4c représente une vue en perspective éclatée du premier profilé de la Figure 4a, ayant une ouverture de section sensiblement rectangulaire ménagée dans celui-ci, et d'un capot permettant de venir fermer ladite ouverture ;
- la Figure 4d représente une vue en perspective du premier profilé de la Figure 4a, son ouverture étant fermée par le capot représenté sur la Figure 4c ;
- la Figure 5 est une vue en perspective éclatée d'un kit d'assemblage selon un premier mode de réalisation de la présente invention, l'élément d'assemblage étant également représenté retourné à 180° afin de mieux discerner les trous traversants de celui-ci, les premier et second profilés associés étant également représentés ;
- la Figure 6 est une vue en perspective d'un kit d'assemblage selon le premier mode de réalisation de la présente invention, le dispositif d'assemblage ayant assemblé les premier et second profilés ;
- la Figure 7 est une vue de profil d'un kit d'assemblage selon un premier mode de réalisation de la présente invention ;
- la Figure 8 est une vue en coupe selon VIII-VIII de la Figure 7 ;
- la Figure 9 est une vue en coupe selon IX-IX de la Figure 7 ;
- la Figure 10 est une vue en perspective éclatée d'un kit d'assemblage selon un second mode de réalisation de la présente invention, l'élément d'assemblage étant représenté retourné à 180° afin de mieux discerner les trous traversants de celui-ci, les premier et second profilés étant également représentés ;
- la Figure 11 est une vue en perspective d'un kit d'assemblage selon un second mode de réalisation de la présente invention ;
- la Figure 12 est une vue de profil d'un kit d'assemblage selon un second mode de réalisation de la présente invention ;
- la Figure 13 est une vue en coupe selon XIII-XIII de la Figure 12 ;
- la Figure 14 est une vue en coupe selon XIV-XIV de la Figure 12 ;
- les Figures 15a à 15j sont des vues planes en coupe représentant les différentes étapes de l'assemblage du dispositif d'assemblage dans l'espace de réception du premier profilé ;
- les Figures 16a à 16d sont des vues planes avec le premier profilé coupé représentant divers angles que peuvent prendre la première partie de l'élément d'assemblage ;
- la Figure 17a est une vue en perspective d'un élément d'assemblage selon un premier mode de réalisation de la présente invention, présentant un angle droit entre la rotule et la seconde partie de l'élément d'assemblage ;
- la Figure 17b est une vue de profil de l'élément d'assemblage de la Figure 17a ;
- la Figure 17c est une vue en perspective d'un élément d'assemblage selon un deuxième mode de réalisation de la présente invention, présentant un angle aigu entre la rotule et la seconde partie de l'élément d'assemblage ;
- la Figure 17d est une vue de profil de l'élément d'assemblage de la Figure 17c ;
- la Figure 17e est une vue en perspective d'un élément d'assemblage selon un troisième mode de réalisation de la présente invention, présentant un angle obtus entre la rotule et la seconde partie de l'élément d'assemblage ;
- la Figure 17f est une vue de profil de l'élément d'assemblage de la Figure 17e ;
- la Figure 18 est une vue en perspective éclatée d'un kit d'assemblage avec un second profilé selon un premier mode de réalisation ;
- la Figure 19 est une vue en perspective d'un kit d'assemblage avec un second profilé selon un premier mode de réalisation ;
- la Figure 20 est une vue de profil d'un kit d'assemblage avec un second profilé selon un premier mode de réalisation ;
- la Figure 21 est une vue en coupe selon XXI-XXI de la Figure 20 ;
- la Figure 22 est une vue en perspective éclatée d'un kit d'assemblage avec un second profilé selon un deuxième mode de réalisation ;
- la Figure 23 est une vue en perspective d'un kit d'assemblage avec un second profilé selon un deuxième mode de réalisation ;
- la Figure 24 est une vue de dessous d'un kit d'assemblage avec un second profilé selon un deuxième mode de réalisation ;
- la Figure 25 est une vue de profil d'un kit d'assemblage avec un second profilé selon un deuxième mode de réalisation ;
- la Figure 26 est une vue en coupe selon XXVI-XXVI de la Figure 25 ;
- la Figure 27 est une vue en coupe selon XXVII-XXVII de la Figure 25 ;
- la Figure 28 est une vue en perspective éclatée d'un kit d'assemblage avec un second profilé selon un troisième mode de réalisation ;
- la Figure 29 est une vue en perspective d'un kit d'assemblage avec un second profilé selon un troisième mode de réalisation ;
- la Figure 30 est une vue de profil d'un kit d'assemblage avec un second profilé selon un troisième mode de réalisation ;
- la Figure 31 est une vue en coupe selon XXXI-XXXI de la Figure 30 ;
- la Figure 32 est une vue en coupe selon XXXII-XXXII de la Figure 30 ;
- la Figure 33 est une vue en perspective éclatée d'un kit d'assemblage avec un premier profilé de section hexagonal et un second profilé selon un autre mode de réalisation ;
- la Figure 34 est une vue de profil d'un kit d'assemblage avec un premier profilé de section hexagonal et un second profilé selon un autre mode de réalisation ;
- la Figure 35 est une vue en coupe selon XXXV-XXXV de la Figure 34 ;
- la Figure 36 est une vue en perspective d'un kit d'assemblage avec un premier profilé de section hexagonal et un second profilé selon un quatrième mode de réalisation ;
- la Figure 37 est une vue plus en détail du cercle XXXVII de la Figure 36 ;
- les Figures 38a à 38m représentent des sections de premiers profilés que l'on peut utiliser dans la présente invention ;
- la Figure 39a représente une vue de dessus d'un capot que l'on peut utiliser pour refermer une ouverture de profilé ;
- la Figure 39b représente une vue de dessus d'un cache-rainure que l'on peut utiliser pour obturer une rainure de profilé ;
- les Figures 40a à 40p représentent des sections de seconds profilés que l'on peut utiliser dans la présente invention selon différents modes de montage ;
- les Figures 41a à 41f illustrent une table basse incorporant des éléments assemblés à l'aide de kits d'assemblage selon l'invention ;

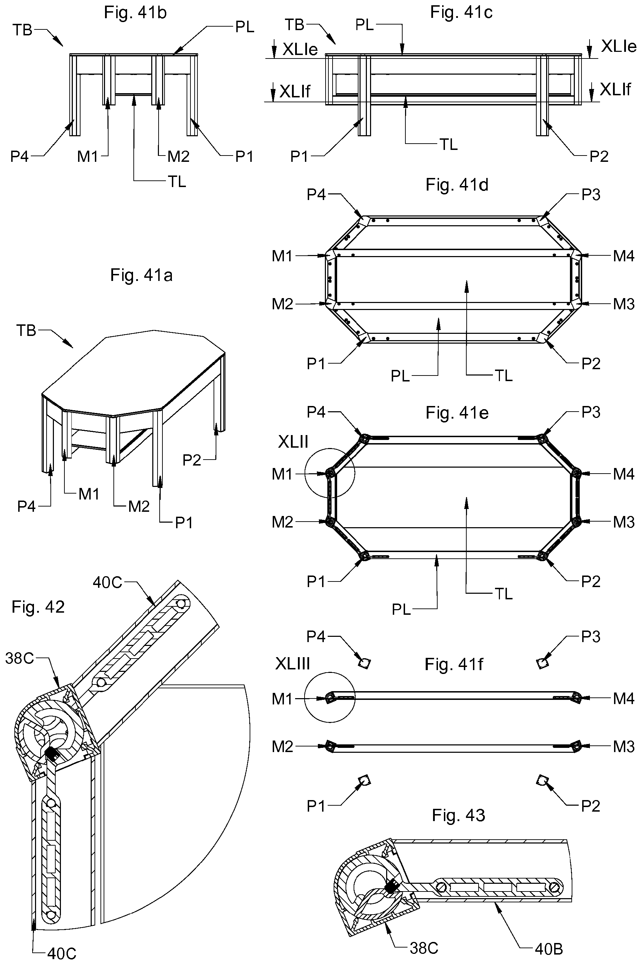

- la Figure 41a est une vue en perspective de la table basse ;
- les Figures 41b et 41c sont des vues en élévation respectivement du petit côté et du grand côté de la table basse ;
- la Figure 41d est une vue de dessous de la table basse ;
- les Figures 41e et 41f sont des vues en coupe respectivement selon XLIe-XLIe et XLIf-XLIf de la Figure 41c ;
- les Figures 42 et 43 sont, à plus grande échelle, des vues respectivement des détails XLII et XLIII des Figures respectivement 41e et 41f ;

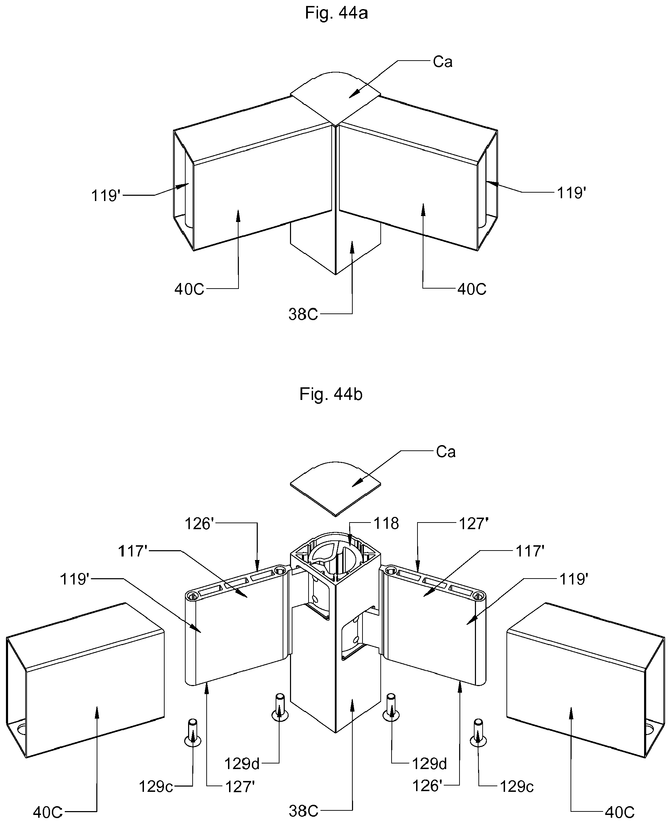

- la Figure 44a est, à plus grande échelle, une vue partielle en perspective d'un angle supérieur de la table ;
- la Figure 44b est une vue éclatée de la Figure 44a ;

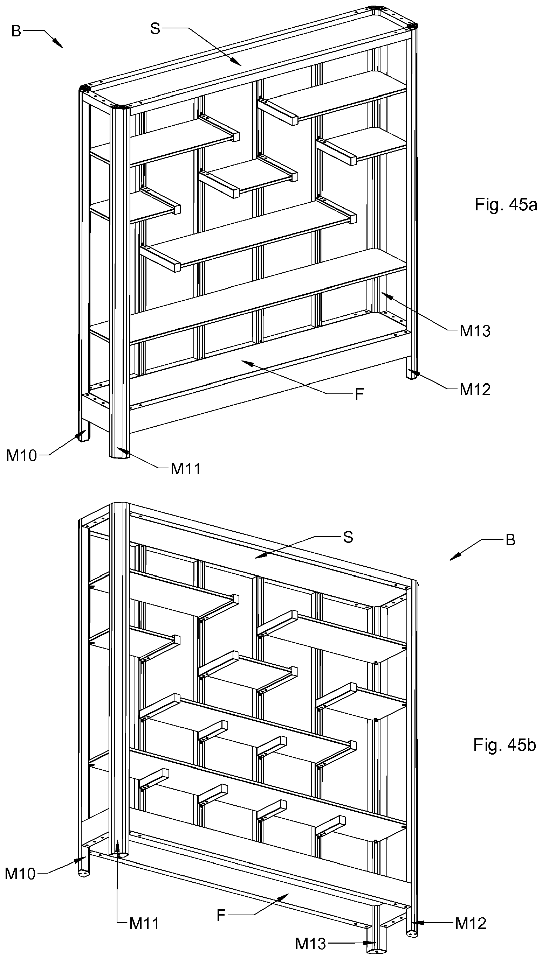

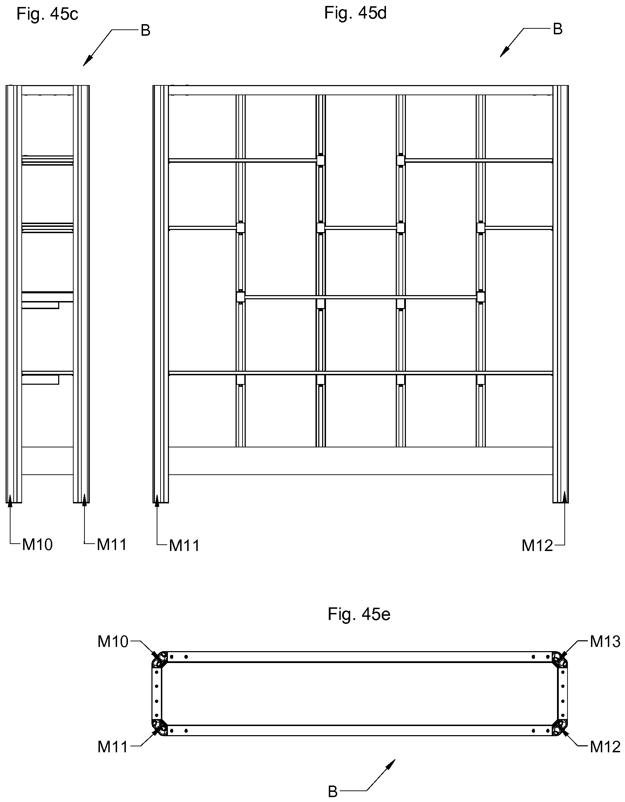

- les Figures 45a à 45e représentent une bibliothèque incorporant des éléments assemblés à l'aide de kits d'assemblage selon l'invention ;
- les Figures 45a et 45b sont des vues en perspective montrant respectivement le dessus et le dessous des tablettes de la bibliothèque ;
- les Figures 45c à 45e sont des vues respectivement de côté, de face et de dessus de la bibliothèque ;

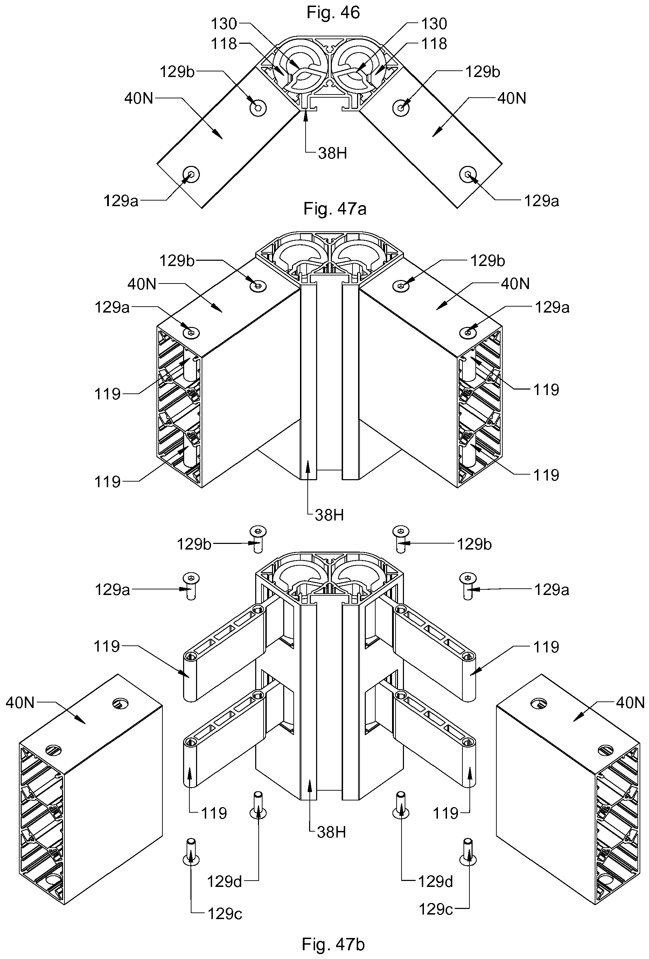

- la Figure 46 est une vue partielle de dessus d'un angle supérieur de la bibliothèque des Figures 45a à 45e, le capot du poteau d'angle étant omis ;
- la Figure 47a est une vue partielle en perspective de l'angle de la Figure 46 ;
- la Figure 47b est une éclatée de la Figure 47a ;

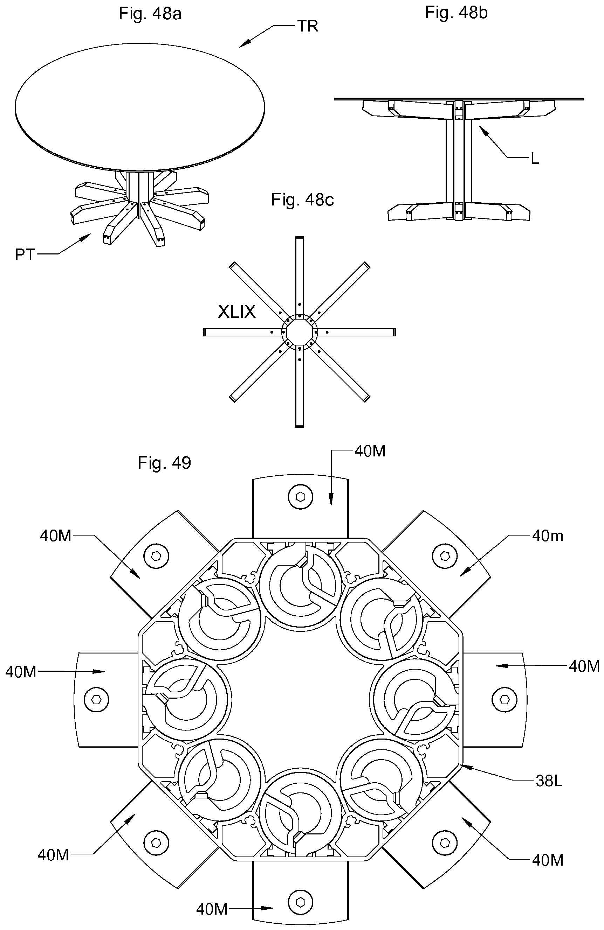

- les Figures 48a à 48c représentent une table ronde incorporant des éléments assemblés à l'aide de kits d'assemblage selon l'invention, étant respectivement une vue en perspective, de côté et de dessous ;
- la Figure 49 est à plus grande échelle une vue correspondant au détail XLIX de la Figure 47c ;

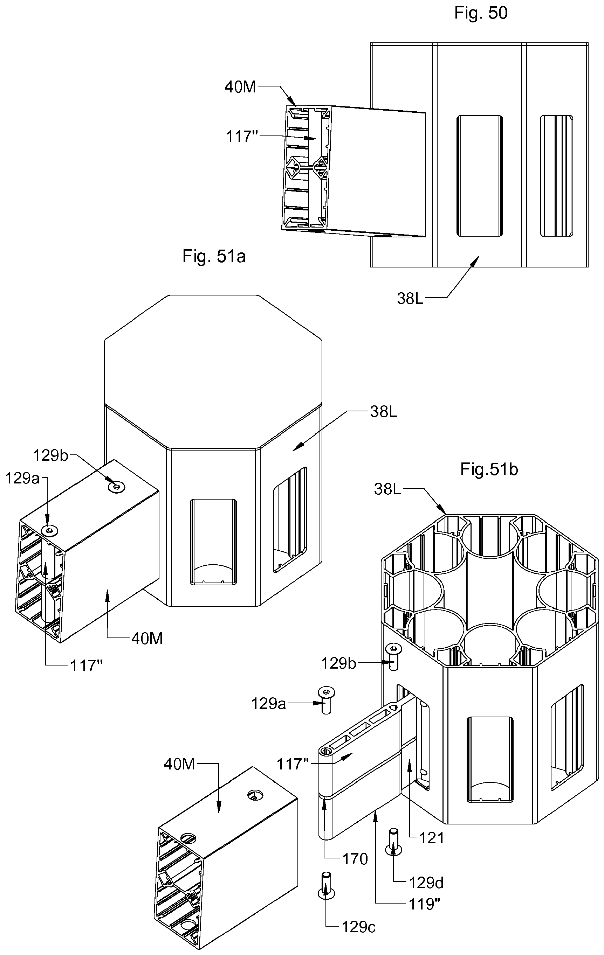

- la Figure 50 est à plus grande échelle une vue correspondant au détail L de la Figure 47b ;
- la Figure 51a est une vue partielle en perspective correspondant à la Figure 50 montrant plus particulièrement des éléments assemblés vus sur la partie de gauche de ceux-ci ;
- la Figure 51b est une vue éclatée correspondant à la Figure 51a ;

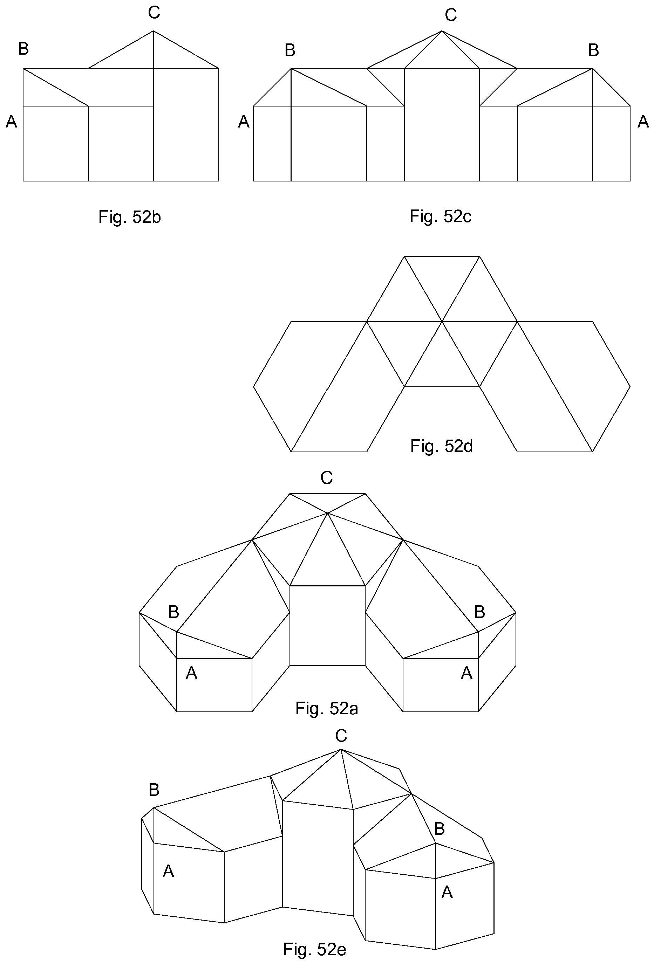

- la Figure 52a est une vue schématique en perspective d'une structure de maison dont les éléments seront assemblés à l'aide de kits d'assemblage selon la présente invention ;
- la Figure 52b est une vue schématique de côté de la maison de la Figure 52a ;
- la Figure 52c est une vue schématique de face de la maison de la Figure 52a ;
- la Figure 52d est une vue schématique de dessus de la maison de la Figure 52a ;
- la Figure 52e est une autre vue schématique en perspective de la maison de la Figure 52a ;

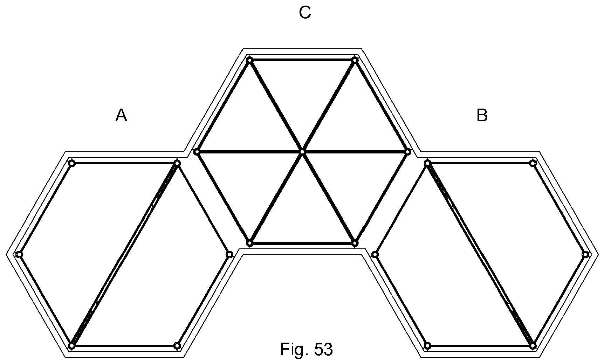

- la Figure 53 est une vue schématique de dessus représentant la structure de maison de la Figure 52a, une enveloppe extérieure étant accrochée à la structure ;

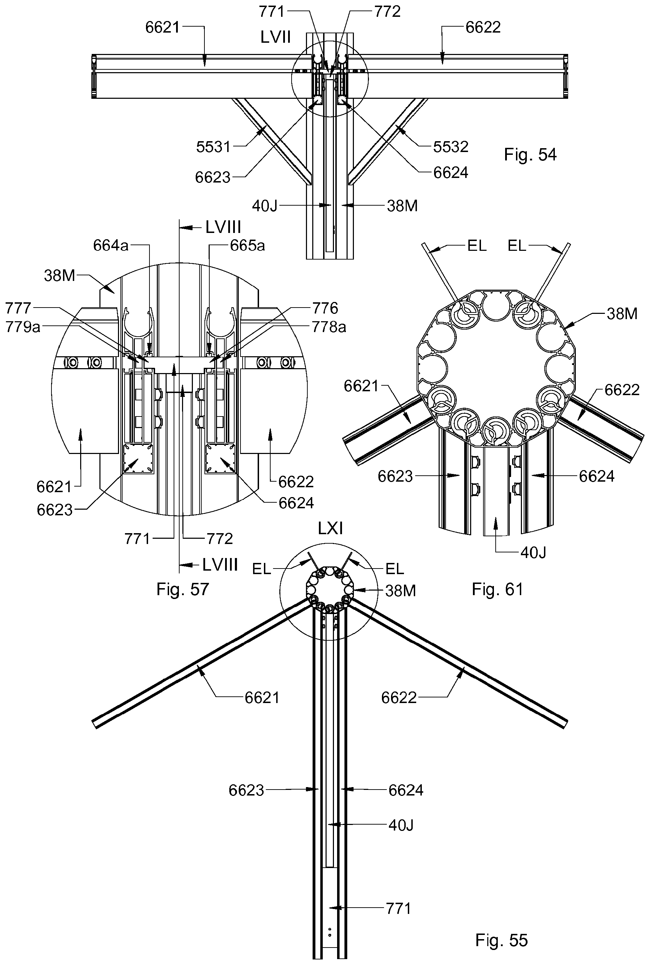

- la Figure 54 est une vue partielle de face d'un angle de plancher A de la structure de maison de la Figure 52a ;
- la Figure 55 est une vue partielle de dessus d'un angle de plancher A de la structure de maison de la Figure 52a ;

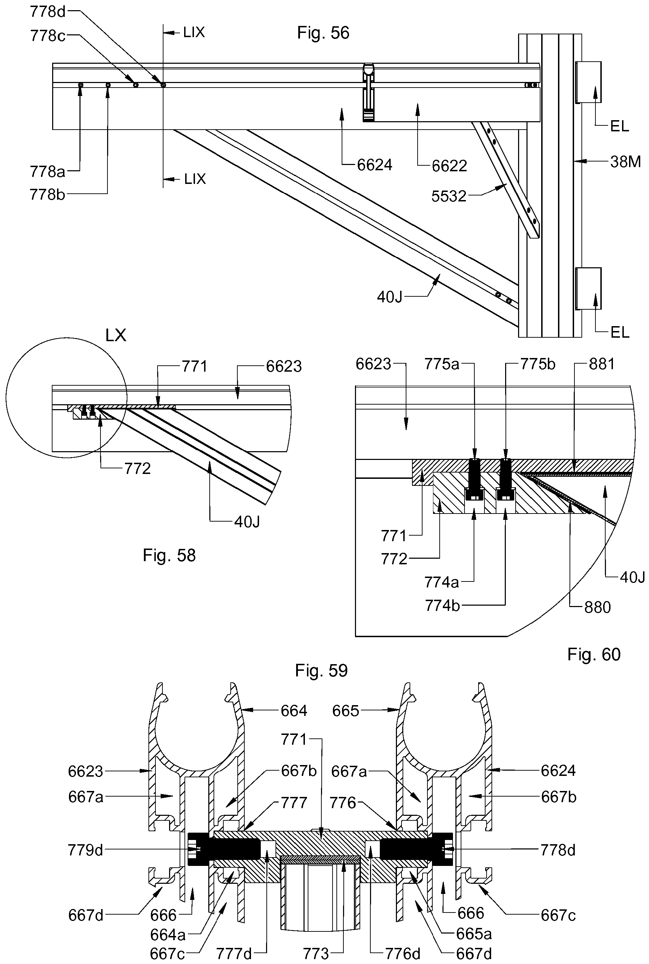

- la Figure 56 est une vue partielle de profil d'un angle de plancher A de la structure de maison de la Figure 52a ;
- la Figure 57 est à plus grande échelle une vue correspondant au détail LVII de la Figure 54 ;
- la Figure 58 est une vue en coupe selon LVIII-LVIII de la Figure 57 ;
- la Figure 59 est une vue en coupe selon LIX-LIX de la Figure 56 ;
- la Figure 60 est à plus grande échelle une vue correspondant au détail LX de la Figure 58 ;
- la Figure 61 est à plus grande échelle une vue correspondant au détail LXI de la Figure 55 ;

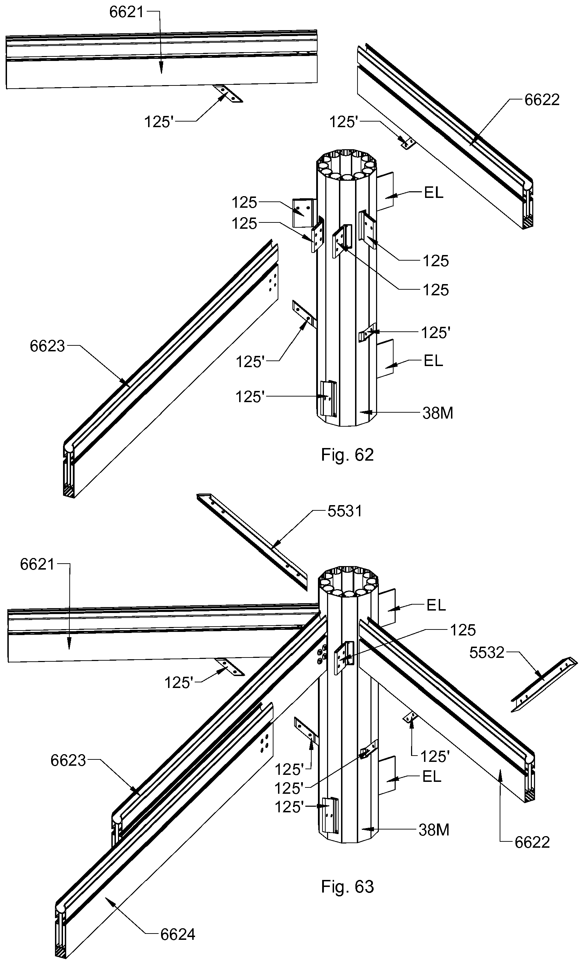

- la Figure 62 est une vue partielle en perspective, éclatée de l'angle de plancher de la Figure 54, montrant un poteau, une traverse horizontale principale et deux traverses horizontales latérales ;
- la Figure 63 est une vue partielle en perspective, éclatée de l'angle de plancher de la Figure 54, montrant les traverses de la Figure 62 assemblées au poteau, ainsi que la seconde traverse horizontale principale et les contreventements des traverses horizontales latérales ;

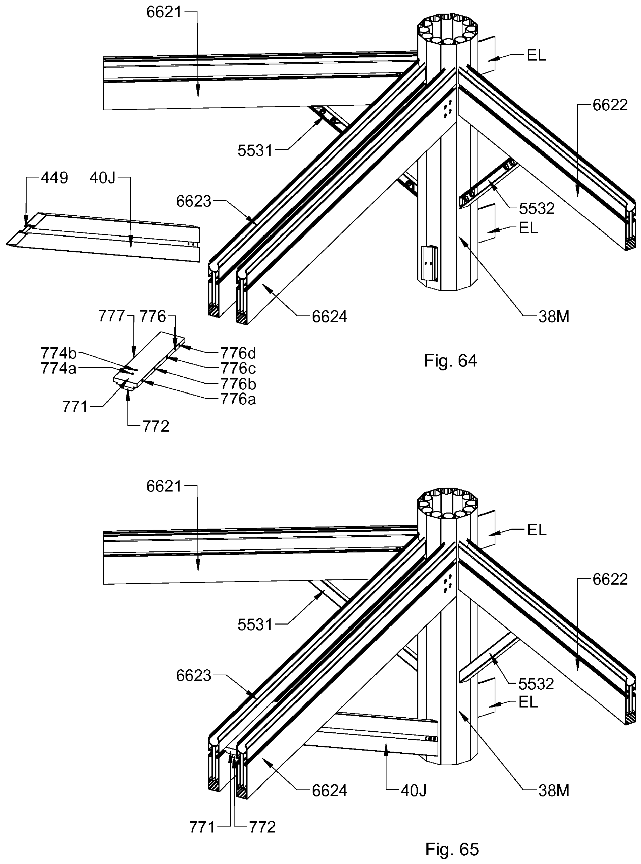

- la Figure 64 est une vue partielle en perspective, éclatée de l'angle de plancher de la Figure 54, montrant les traverses horizontales principales, les traverses horizontales latérales et les contreventements des traverses horizontales latérales assemblés, ainsi que le contreventement des traverses horizontales principales et la platine de blocage de ce dernier ;
- la Figure 65 est une vue partielle en perspective de l'angle de plancher de la Figure 54 ;

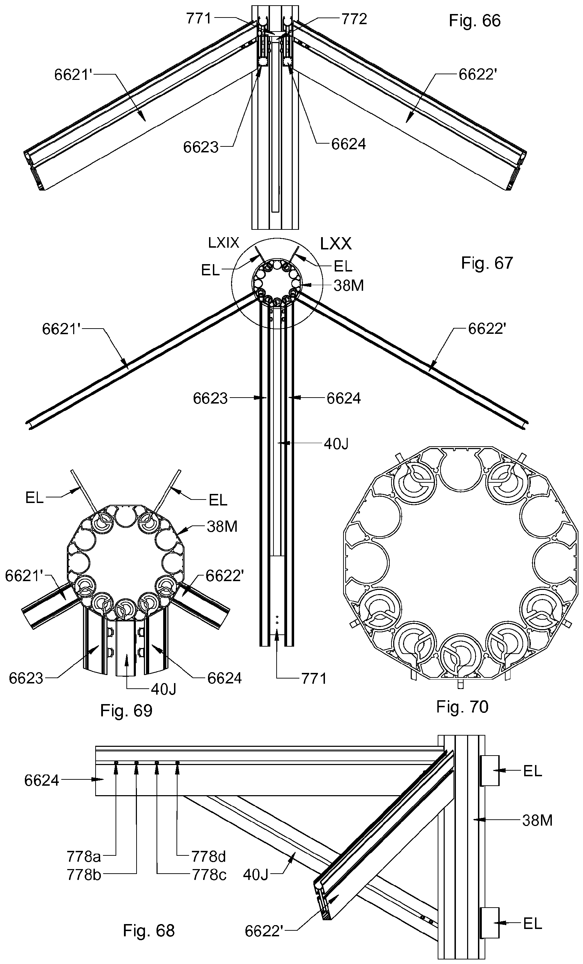

- la Figure 66 est une vue partielle de face d'un angle de toiture B de la structure de maison de la Figure 52a ;
- la Figure 67 est une vue partielle de dessus d'un angle de toiture B de la structure de maison de la Figure 52a ;
- la Figure 68 est une vue partielle de profil d'un angle de toiture B de la structure de maison de la Figure 52a ;
- la Figure 69 est à plus grande échelle une vue correspondant au détail LXIX de la Figure 67 ;
- la Figure 70 est à encore plus grande échelle une vue correspondant au détail LXX de la Figure 67 ;

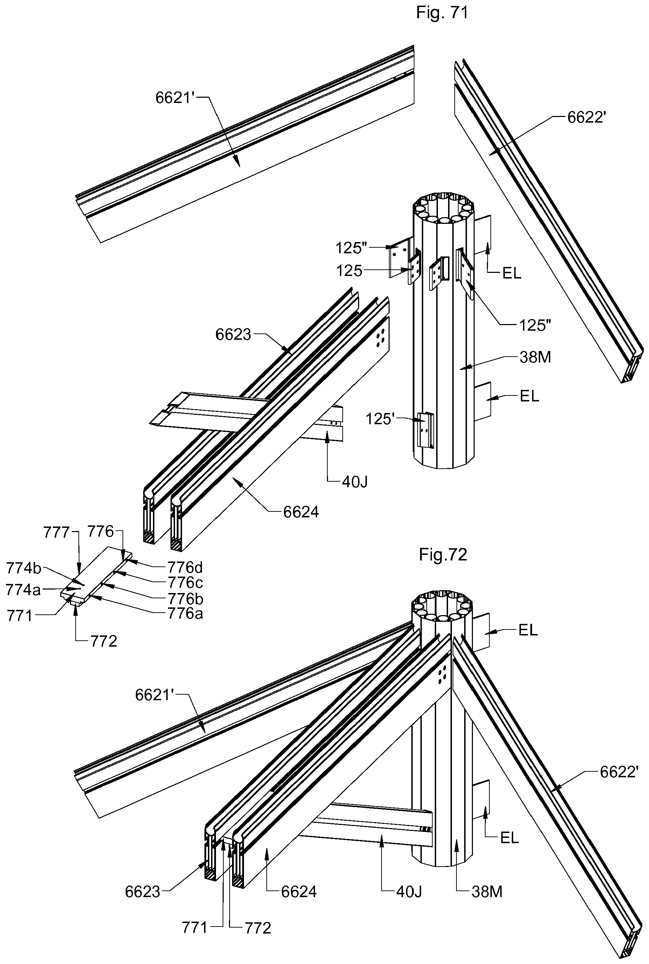

- la Figure 71 est une vue partielle en perspective, éclatée de l'angle de toiture de la Figure 66, montrant un poteau, deux traverses horizontales avec leur contreventement et leur platine de blocage, et deux traverses latérales ;
- la Figure 72 est une vue partielle en perspective de l'angle de toiture de la Figure 66 ;

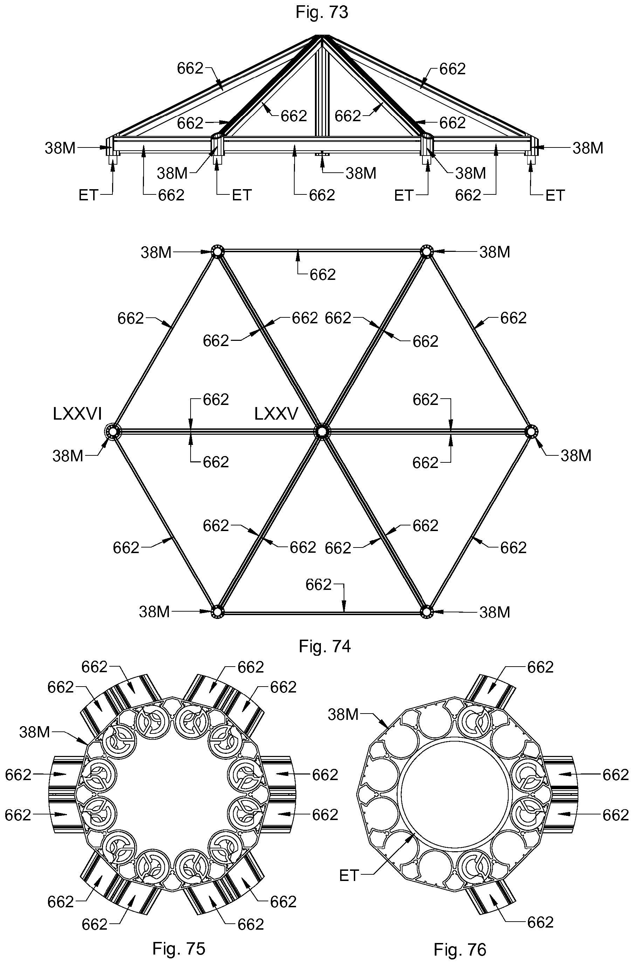

- la Figure 73 est une vue de face de l'angle de toiture C de la structure de maison de la Figure 52a ;
- la Figure 74 est une vue de dessus de l'angle de toiture C de la structure de maison de la Figure 52a ;
- la Figure 75 est à plus grande échelle une vue correspondant au détail LXXV de la Figure 74 ;
- la Figure 76 est à plus grande échelle une vue correspondant au détail LXXVI de la Figure 74 ;

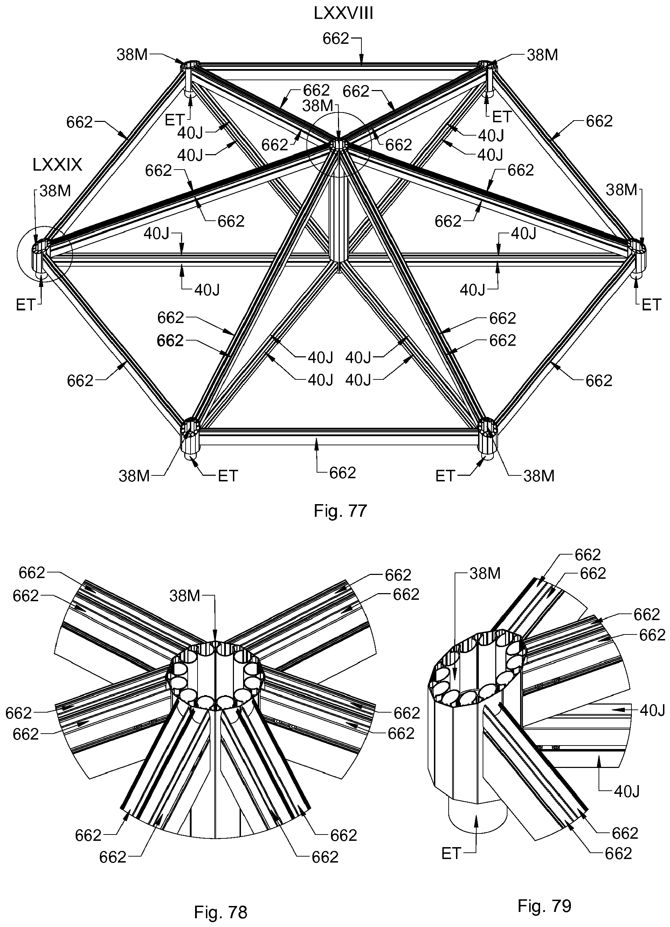

- la Figure 77 est une vue en perspective de l'angle de toiture C de la structure de maison de la Figure 52a ;
- la Figure 78 est à plus grande échelle une vue correspondant au détail LXXVIII de la Figure 77 ;
- la Figure 79 est à plus grande échelle une vue correspondant au détail LXXIX de la Figure 77.

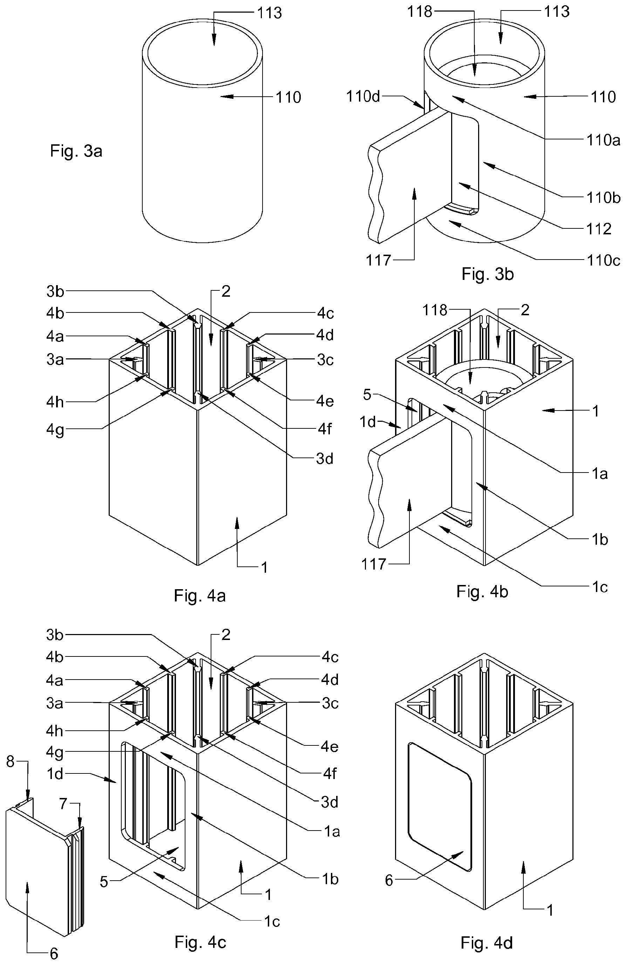

Si l'on se réfère aux Figures 3a et 3b, on peut voir que l'on a représenté un premier profilé 110 de section circulaire. Ce premier profilé 110 est typiquement en aluminium. La section circulaire du premier profilé 110 permet de créer un espace de réception intérieur 113 de forme circulaire. On peut ménager une ouverture 112 de section sensiblement rectangulaire dans le premier profilé 110 qui débouche dans l'espace de réception intérieur 113. On peut réaliser l'ouverture 112 par fraisage. Les angles de l'ouverture 112 sont arrondis, ce qui permet d'améliorer la résistance mécanique, notamment la performance à l'arrachement. Par l'ouverture 112, on peut venir insérer un dispositif d'assemblage selon la présente invention, comprenant un élément d'assemblage 117 et une clé qui seront décrits plus en détail ci-après.

La réalisation de l'ouverture 112 dans le premier profilé 110 crée des toiles supérieure et inférieure respectivement 110a et 110c ainsi que des toiles latérales 110b et 110d. Ce sont ces toiles supérieure et inférieure 110a et 110c qui vont supporter le maintien de la liaison d'un second profilé au premier profilé 110 par le dispositif d'assemblage en cas de fortes contraintes mécaniques qui seraient appliquées sur celui-ci. La hauteur de l'ouverture 112 est légèrement supérieure à la hauteur de l'élément d'assemblage 117 et de la clé afin d'assurer le maintien longitudinal de l'assemblage.

La largeur de l'ouverture 112 est telle qu'elle permet le passage de l'élément d'assemblage 117 et de la clé lors de l'assemblage. De plus, la largeur de l'ouverture entre les toiles latérales 110b et 110d est telle que le diamètre du cylindre formé par l'extrémité de l'élément d'assemblage 117 et la clé est supérieur à cette largeur, ce qui permet le maintien de l'élément d'assemblage 117 et de la clé dans l'espace de réception intérieur 113.

Si l'on se réfère aux Figures 4a à 4d, on peut voir que l'on a représenté un premier profilé 1 de section rectangulaire et qui est typiquement en aluminium. Le profilé 1 contient un espace de réception intérieur 2 qui est de section circulaire. La section circulaire de l'espace de réception intérieur 2 est formée à l'aide de douze plots dont quatre plots d'angle 3a, 3b, 3c et 3d, et huit plots de face 4a et 4b, 4c et 4d, 4e et 4f, 4g et 4h. Les bordures libres de ces douze plots permettent de former un espace délimité par une surface enveloppe cylindrique de géométrie prédéfinie de l'espace de réception intérieur 2 qui aura alors une forme circulaire « fictive ».

Sur l'une des faces du profilé 1, est ménagée une ouverture 5 de section sensiblement rectangulaire et dont les angles sont arrondis. Cette ouverture 5 débouche dans l'espace de réception intérieur 2. L'ouverture 5 peut être fermée par un capot 6 (Figure 4d). Le capot 6 peut par exemple venir refermer l'ouverture 5 grâce à des moyens de clipsage 7 et 8 disposés sur la face arrière du capot 6. Les angles de l'ouverture 5 sont arrondis, ce qui améliore la résistance mécanique, notamment la performance à l'arrachement. Par l'ouverture 5, on peut venir insérer le dispositif d'assemblage selon la présente invention, comprenant un élément d'assemblage 117 et une clé qui seront décrits plus en détail ci-après.

La réalisation de l'ouverture 5 par usinage forme des toiles supérieure et inférieure 1a et 1c ainsi que toiles latérales 1b et 1d. Ce sont ces toiles supérieure et inférieure 1a et 1c qui vont supporter le maintien de la liaison d'un second profilé au premier profilé par un dispositif d'assemblage en cas de fortes contraintes mécaniques qui seraient appliquées sur celui-ci. La hauteur de l'ouverture 5 est légèrement supérieure à la hauteur de l'élément d'assemblage 117 et de la clé afin d'assurer le maintien longitudinal de l'assemblage. La largeur de l'ouverture 5 est telle qu'elle permet le passage de l'élément d'assemblage 117 et de la clé lors de l'assemblage.

Dans ce profilé rectangulaire, l'espace de réception intérieur circulaire est formé par les douze plots 3a, 3b, 3c et 3d ainsi que 4a, 4b, 4c, 4d, 4e, 4f, 4g et 4h. L'écartement entre les plots 3a et 3d est tel que le diamètre du cylindre formé par l'extrémité de l'élément d'assemblage 117 et la clé est supérieur à cette distance, ceci permet le maintien de l'élément d'assemblage 117 et de la clé dans l'espace de réception intérieur. Les plots 3a et 3d permettront également de coopérer avec les moyens de clipsage 7 et 8 du capot 6 afin de refermer l'ouverture 5.

Dans ce qui suit, ou pourra être amené à appeler « dispositif d'assemblage 109 » le dispositif constitué par l'élément d'assemblage 117 et la clé 130.

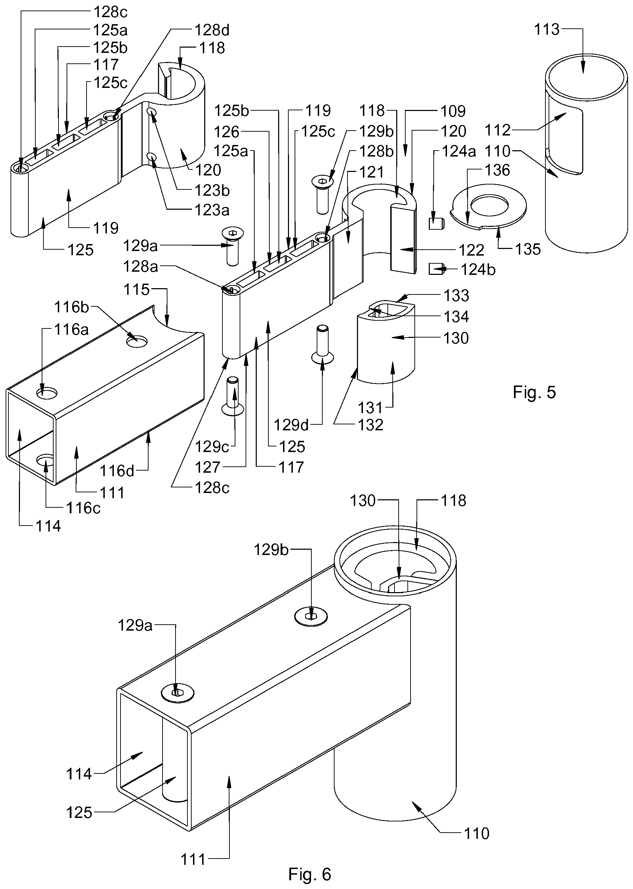

Si l'on se réfère à la Figure 5, on peut voir que l'on a représenté un kit d'assemblage selon un premier mode de réalisation comprenant un dispositif d'assemblage 109 et deux profilés. Le dispositif d'assemblage 109 permet d'assembler deux profilés entre eux, un premier profilé 110, principalement vertical, et un second profilé 111, principalement horizontal dans l'exemple représenté. Le premier profilé 110 est de section circulaire et possède une ouverture 112 sur sa surface circonférentielle débouchant dans un espace de réception intérieur 113. Le second profilé 111 est de section rectangulaire et possède un espace de réception intérieur 114. Le second profilé 111 possède à son extrémité configurée pour venir en contact avec le premier profilé, des bords arrondis 115 pour venir épouser la circonférence du premier profilé 110. Le second profilé 111 possède des trous de vissage 116a, 116b, 116c et 116d qui permettront la fixation du second profilé 111 au dispositif d'assemblage 109 par des seconds moyens de blocage, tels que des vis.

Le dispositif d'assemblage 109 possède un élément d'assemblage 117 possédant une première partie dite rotule 118 et une seconde partie 119.

La rotule 118 a une surface externe 120 qui suit un arc de cylindre. Au voisinage de la seconde partie 119, la rotule possède une première face d'arrêt 121. A l'autre extrémité de la surface externe 120, se trouve une seconde face d'arrêt 122. Au voisinage de la seconde partie 119, sont formés des trous traversants 123a et 123b dans la rotule 118, lesquels débouchent au voisinage de la première face d'arrêt 121. On pourra venir insérer les vis 124a et 124b dans les trous respectivement 123a et 123b. La rotule 118 est creuse ce qui permet de réduire son poids ainsi que le passage de câbles, tels que des câbles conducteurs d'électricité, de lumière ou d'informations, à travers celle-ci.

La seconde partie 119 de l'élément d'assemblage 117 est constituée d'une plaque 125. La plaque 125 possède trois cavités 125a, 125b et 125c qui traversent la plaque de son bord supérieur 126 à son bord inférieur 127. Ces cavités 125a, 125b et 125c sont réalisées d'un point de vue pratique, en partie, afin de rendre minimale la masse de l'élément d'assemblage 117. La plaque 125 possède à chacune de ses deux extrémités quatre filetages 128a, 128b, 128c et 128d, permettant de recevoir, respectivement, les vis 129a, 129b, 129c et 129d. Les vis 129a, 129b, 129c, 129d passent respectivement dans les trous de vissage 116a, 116b, 116c et 116d du second profilé 111.

Le dispositif d'assemblage 109 possède également une pièce de blocage 130 dite clé. La clé 130 possède une surface externe 131 suivant un arc de cylindre de même rayon que la surface externe 120 de la rotule 118 ou d'un rayon inférieur, par exemple inférieur de quelques dixièmes de millimètres pour des dispositifs d'assemblage utilisé dans les exemples, exemples qui vont du mobilier de petites dimensions à une structure pour une maison avec des dispositifs d'assemblage de dimensions appropriées. La clé 130 possède des première, deuxième et troisième faces d'appui 132, 133 et 134, les première et deuxième faces d'appui 132 et 133 étant disposées à chaque extrémité de la clé 130, et la troisième face d'appui 134 étant placée dans un renfoncement de la clé 130. Lors de l'assemblage, la clé 130 peut être placée au niveau de la rotule 118 entre l'intervalle formé par les faces d'arrêt 121 et 122 de la rotule 118. En position d'assemblage, la troisième face d'appui 134 vient en regard des trous traversants 123a et 123b, les vis 124a et 124b pouvant venir en contact avec la troisième face d'appui 134. La clé 130 est creuse afin de rendre minimal le poids du dispositif d'assemblage 109.

Le dispositif d'assemblage 109 comprend également une entretoise de support 135. L'entretoise de support 135 est un disque de rayon légèrement inférieur au rayon de l'espace de réception intérieur 113, de sorte que celle-ci peut être contenue à l'intérieur dudit espace de réception 113. L'entretoise de support 135 est évidée en son centre afin de faire passer des câbles à travers celle-ci, tels que des câbles conducteurs d'électricité, d'informations et de lumière. L'entretoise de support 135 possède une patte 136 qui viendra reposer sur le bord inférieur de l'ouverture 112 du premier profilé 110. En venant s'appuyer contre le bord de l'ouverture 112 du premier profilé 110, les charges qui s'exercent sur l'élément d'assemblage (117) pourront être reprises par cette entretoise 135.

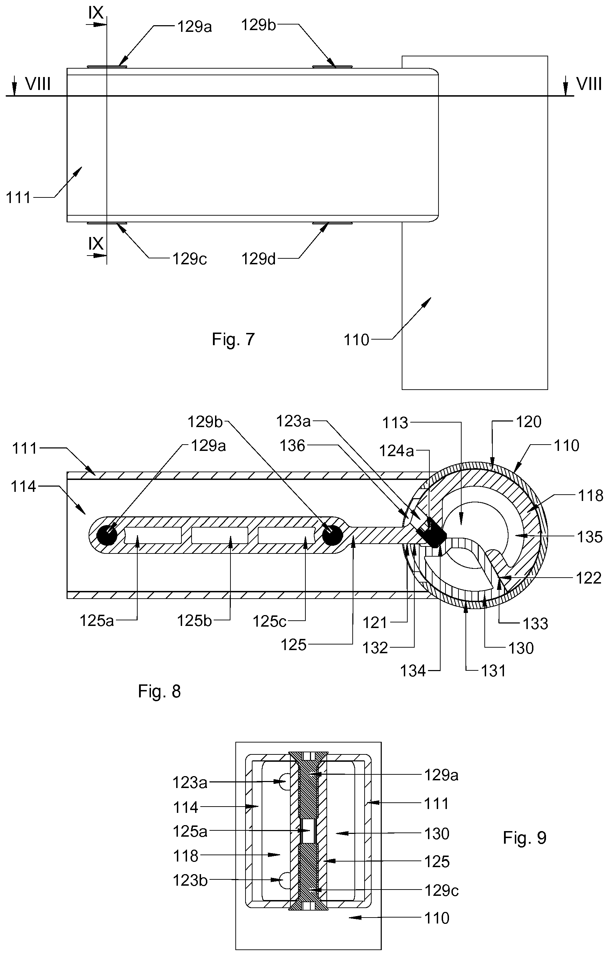

Si l'on se réfère aux Figures 6 à 9, on peut voir que l'on a représenté les profilés 110 et 111 assemblés l'un à l'autre à l'aide du dispositif d'assemblage 109. On a fixé le second profilé 111 à la plaque 125 de la seconde partie 119 de l'élément d'assemblage 117 par vissage. Si l'on se réfère à la Figure 8, on peut voir qu'en position d'assemblage, la vis 124a qui a été insérée dans le trou traversant 123a de la rotule 118 vient en contact contre la troisième face d'appui 134 de la clé 130. En faisant ainsi, on vient expanser la clé 130 contre les parois intérieures du premier profilé 110.

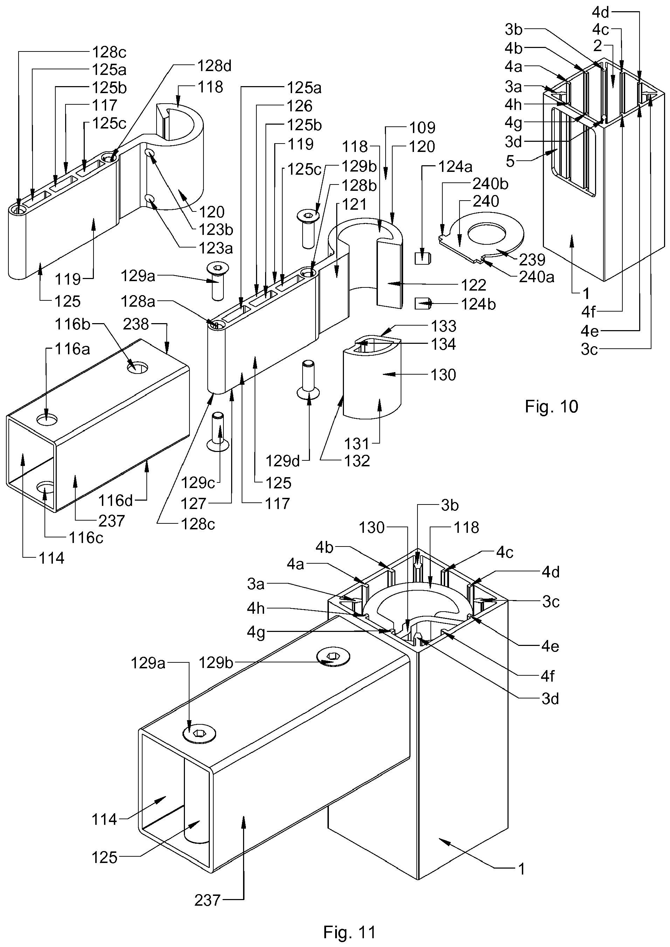

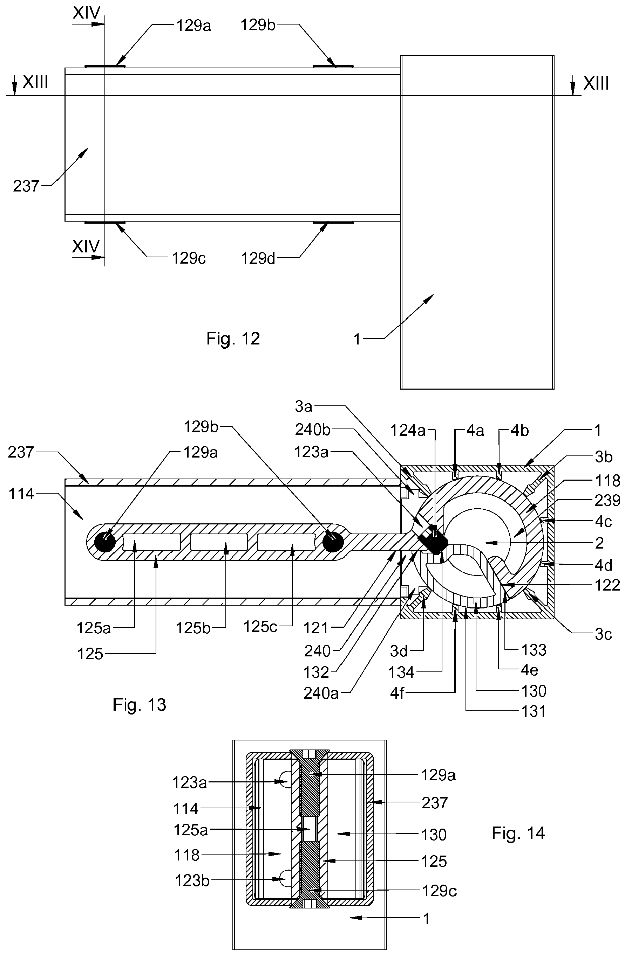

Si l'on se réfère aux Figures 10 à 14, on peut voir que l'on a représenté un kit d'assemblage selon un second mode de réalisation comprenant un dispositif d'assemblage 109 et deux profilés. Dans ce mode de réalisation, l'élément d'assemblage 117 et la clé 130 sont identiques et ne seront pas décrits à nouveau, les chiffres de référence étant les mêmes. Dans ce mode de réalisation, on vient assembler entre eux deux profilés de section rectangulaire, un profilé rectangulaire étant plus pratique à mettre en oeuvre qu'un profilé tubulaire pour certaines structures.

Dans ce mode de réalisation, le premier profilé 1 est identique au profilé décrit dans les Figures 4a à 4d et ne sera pas à nouveau décrit, les chiffres de référence étant les mêmes. Le second profilé 237 est de section rectangulaire et diffère du profilé décrit dans les Figures 4 à 8 par le fait que ses bords 238 configurés pour venir en butée contre le profilé 1 sont droits. Le second profilé 237 possède un espace de réception intérieur 114 ainsi que des trous de vissage 116a, 116b, 116c et 116d afin de fixer le second profilé 237 au premier profilé 1 par des seconds moyens de blocage, tels que des vis.

Dans ce mode de réalisation, le dispositif d'assemblage 109 possède une entretoise de support 239. L'entretoise de support 239 a une forme sensiblement de disque dont le rayon est légèrement inférieur au rayon de la section circulaire formée par les plots de l'espace de réception intérieur 2 du premier profilé 1. L'entretoise 239 possède une patte 240 et des tétons 240a et 240b qui sont disposés sur les côtés de la patte 240. La patte 240 est configurée pour venir reposer sur le bord inférieur de l'ouverture 5 du premier profilé. Les tétons 240a et 240b viendront en butée contre la paroi intérieure de la face du premier profilé 1 portant l'ouverture 5 et contre les plots d'angle 3d et 3a de cette face. L'entretoise de support 239 permet d'éviter la déformation de la toile de l'usinage et permet également d'améliorer la performance à la charge du dispositif d'assemblage 109, par appui sur le bord de l'ouverture 5 du profilé 1. De plus l'entretoise de support 239 permet d'éviter la chute de la clé 130 dans le premier profilé 1 lors de l'assemblage de la liaison. Il est également possible d'introduire une autre entretoise de support au-dessus de la rotule 118 et de la clé 130, à l'opposé de la première entretoise, dans le cas où les charges s'appliquent sur le bord supérieur de l'ouverture 5 du premier profilé 1.

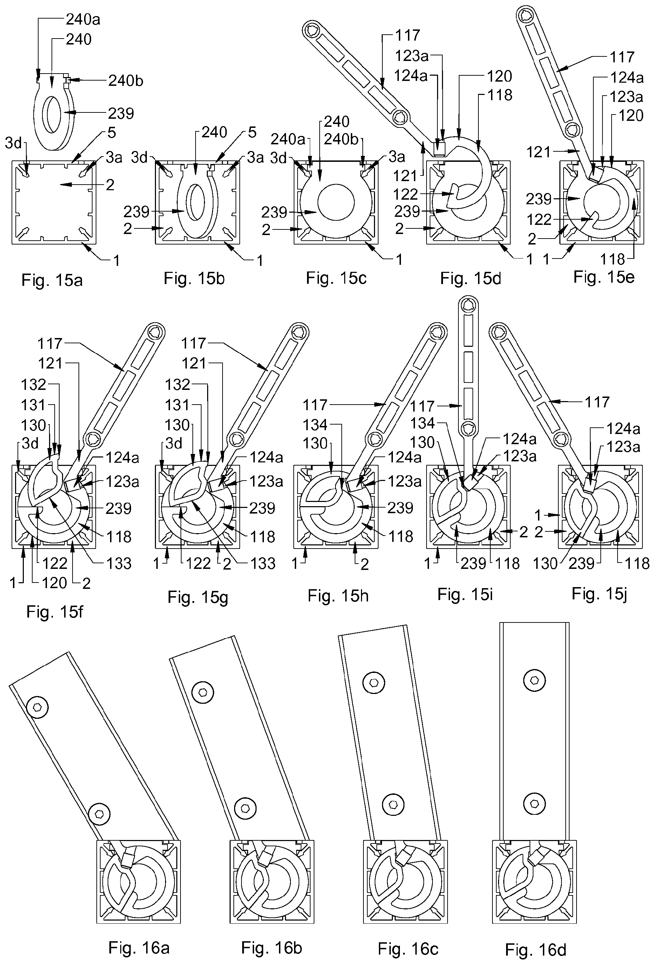

Si l'on se réfère désormais aux Figures 15a à 15j, on peut voir que l'on a représenté les différentes étapes de l'assemblage du dispositif d'assemblage dans un premier profilé de section rectangulaire 1, l'assemblage dans un premier profilé de section circulaire étant identique.

L'assemblage commence par l'introduction de l'entretoise de support 239 dans l'espace de réception intérieur 2 du premier profilé par l'ouverture 5. L'entretoise de support 239 ayant un rayon supérieur à la largeur de l'ouverture 5 ménagée dans le premier profilé 1, on approche l'entretoise en biais par rapport à l'ouverture 5. Une fois que l'entretoise de support 239 est entièrement contenue dans l'espace de réception intérieur 2 du profilé 1, on peut la redresser de telle sorte que la patte 240 vient reposer sur le bord inférieur de l'ouverture 5 et que les tétons 240a et 240b viennent en butée contre les parois du profilé 1 et les plots d'angle 3d et 3a. L'entretoise de support 239 est alors positionnée dans l'espace de réception intérieur 2 et est bloquée par le bord de l'ouverture et les plots du premier profilé (Figure 15c).

Une fois que l'entretoise de support 239 est positionnée, on peut venir insérer l'élément d'assemblage 117. On vient engager l'élément d'assemblage 117 dans l'ouverture 5 par la rotule 118. Pour introduire la rotule 118, on l'insère dans l'ouverture 5 par l'intervalle formé entre les première et seconde faces d'arrêt 121 et 122 de cette dernière.

Lorsque la rotule 118 est entièrement introduite dans l'espace de réception intérieur 2 du profilé 1, la surface externe 120 est en contact avec les plots formant ledit espace de réception intérieur (Figure 15e). On fait alors glisser la surface externe 120 de la rotule 118 sur les plots de sorte que l'élément d'assemblage vienne en butée contre le bord de l'ouverture 5, tel que représenté en Figure 15f. En procédant ainsi, on va pouvoir présenter l'intervalle formé entre les première et seconde faces d'arrêt 121 et 122 de la rotule 118, de sorte qu'on pourra venir insérer la clé 130 dans cet intervalle par l'ouverture 5 du profilé 1.

On vient insérer la clé 130 par l'ouverture 5, de telle sorte que l'arête commune de la surface extérieure 131 et de la face d'appui 133 vienne en contact contre la face d'arrêt 122 de la rotule 118, et que la surface extérieure 131 vienne en contact contre le plot 3d. On fait ensuite glisser la clé contre la face d'arrêt 122 de la rotule 118 jusqu'à ce que la clé remplisse l'intervalle formé entre les faces d'arrêt 121 et 122 de la rotule 118 (Figure 15h). Dans cette position, la rotule 118 et la clé 130 forment un cylindre qui vient épouser la section circulaire de l'espace de réception intérieur 2 formée par les plots.

On fait ensuite tourner le dispositif d'assemblage constitué de la rotule 118 et de la clé 130 dans une position, telle que celle représentée par exemple dans la Figure 15i qui permet d'avoir accès aux vis de serrage 124a et 124b. Les vis de serrage 124a et 124b sont insérées dans les trous de serrage respectifs 123a et 123b avant la mise en place de l'élément d'assemblage 117. Lorsque les vis 123a et 123b sont resserrées, celles-ci viennent en butée contre la troisième face d'appui 134 de la clé 130. En procédant ainsi, on vient expanser la clé 130 contre les plots, ce qui permet de supprimer les jeux, tout en conservant une possibilité de rotation pour l'élément d'assemblage 117. Ainsi, selon l'intensité du serrage des vis 124a et 124b, il sera possible de laisser plus ou moins de possibilité de rotation pour le dispositif d'assemblage constitué de l'élément d'assemblage 117 et de la clé. Les Figures 15i et 15j représentent les positions limites que l'on peut utiliser pour assembler un second profilé au premier profilé. Il va de soi que pour obtenir une inclinaison angulaire dans l'autre sens, et afin de pouvoir resserrer les vis 124a et 124b, il suffit de monter la rotule dans le sens opposé à celui représenté dans le Figures 15a à 15j.

Ce montage permet de former une liaison surdimensionnée contenue dans un logement rigide, ce qui permet d'obtenir un bon maintien de la liaison avec de très bonnes performances à l'arrachement.

Si l'on se réfère aux Figures 16a à 16d, on peut voir que l'on a représenté diverses positions d'assemblage de deux profilés l'un à l'autre. Le premier profilé peut être utilisé, par exemple, comme montant, alors que le second profilé sera utilisé comme traverse. L'angle final du montage sera bloqué par le contact du second profilé contre le premier. Comme on peut le voir sur les Figures 16a à 16d, les trous de vissage formés sur le second profilé seront effectués selon l'angle que l'on souhaite former entre les premier et second profilés de telle sorte que les trous de vissage soient en regard des filetages correspondants de l'élément d'assemblage.

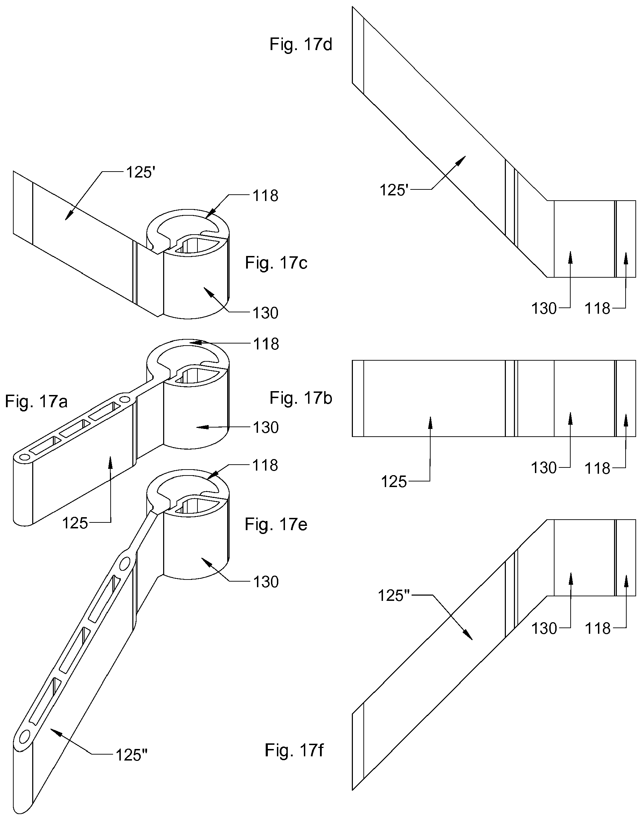

Si l'on se réfère maintenant aux Figures 17a à 17f, on peut voir que l'on a représenté plusieurs combinaisons d'élément d'assemblage et de clé.

Sur les Figures 17a et 17b, on peut voir que l'on a représenté un élément d'assemblage dans lequel la ligne longitudinale moyenne de la plaque d'assemblage 125 est perpendiculaire à l'axe du cylindre formé par la rotule 118 et la clé 130. Cet élément d'assemblage permet de former un assemblage de profilés perpendiculaires l'un à l'autre.

Sur les Figures 17c et 17d, on peut voir que l'on a représenté un élément d'assemblage dans lequel la ligne longitudinale moyenne de la plaque d'assemblage 125' et l'axe du cylindre formé par la rotule 118 et la clé 130 forment un angle aigu.

De la même manière, on peut voir que l'on a représenté sur les Figures 17e et 17f, un élément d'assemblage dans lequel la ligne longitudinale moyenne de la plaque d'assemblage 125" et l'axe du cylindre formé par la rotule 118 et la clé 130 forment un angle obtus.

Ces différentes configurations permettent d'assembler des profilés de telle sorte que l'angle formé par les profilés assemblés ne soit pas droit.

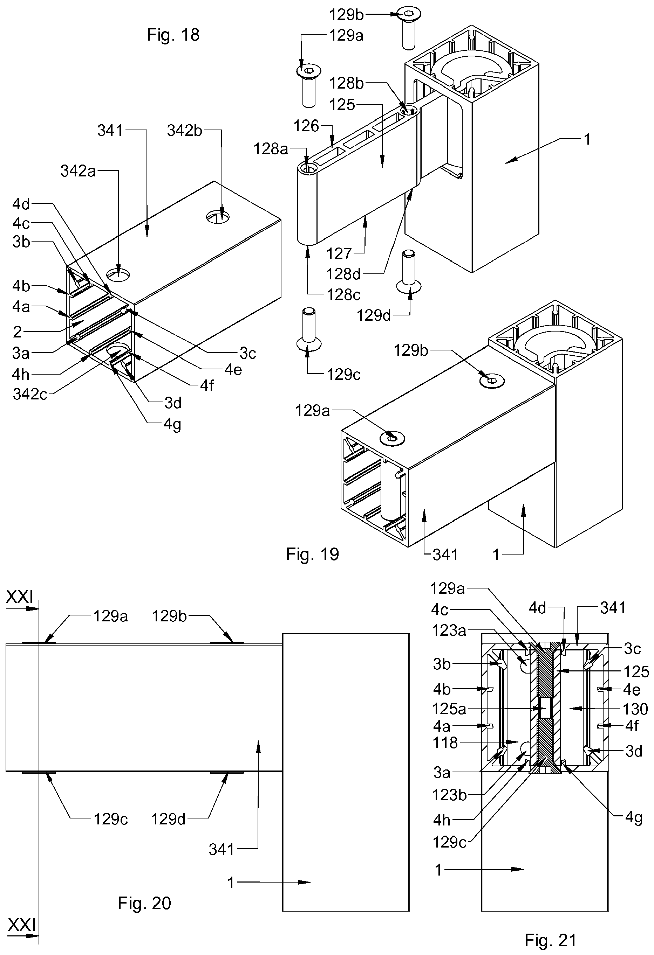

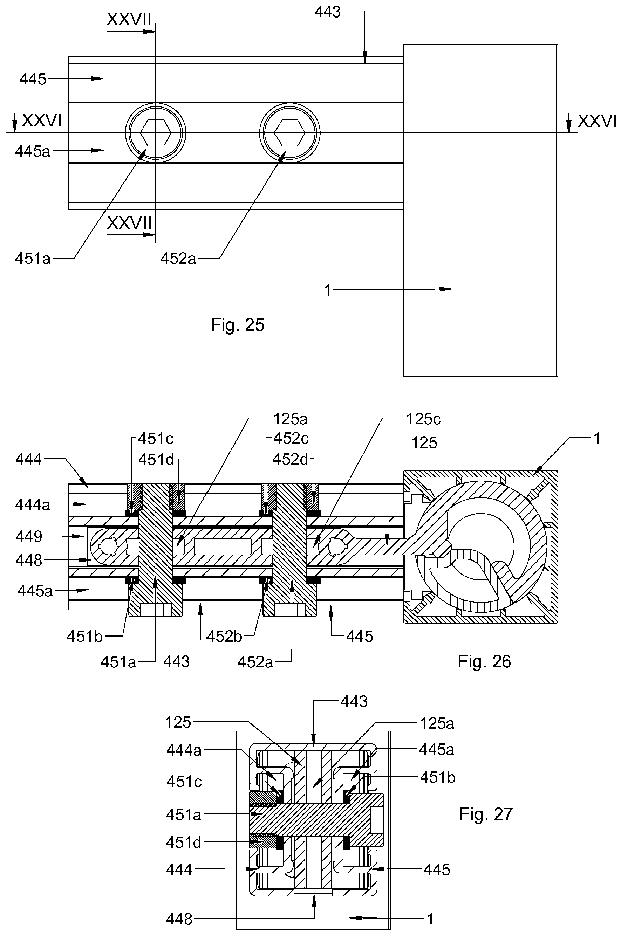

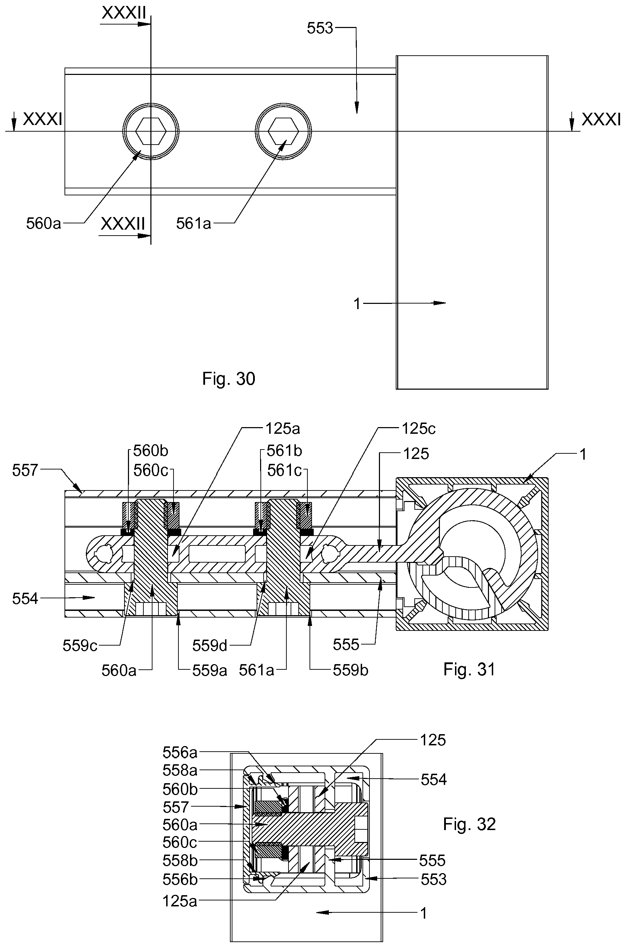

Si l'on se réfère aux Figures 18 à 32, on peut voir que l'on a représenté le montage de trois différents types de second profilé sur un premier profilé de section rectangulaire. Le montage du dispositif d'assemblage dans le premier profilé de section rectangulaire sera identique au montage du dispositif d'assemblage dans le premier profilé décrit ci-dessus.

Si l'on se réfère maintenant aux Figures 18 à 21, on peut voir que l'on a représenté l'assemblage d'un second profilé de section rectangulaire au premier profilé 1. Sur ces figures, le dispositif d'assemblage est introduit tel que décrit ci-dessus dans le premier profilé 1. Le second profilé 341 est identique au profilé 1 à l'exception que ce profilé possède des trous d'assemblage nécessaires à sa fixation et possède un espace de réception intérieur 2. De la même manière que le premier profilé 1, le second profilé 341 possède quatre plots d'angle 3a, 3b, 3c et 3d, ainsi que huit plots de face 4a, 4b, 4c, 4d, 4e, 4f, 4g et 4h. L'espacement entre les plots de face de chaque face du profilé est tel que la plaque 125 de l'élément d'assemblage 117 peut être insérée entre deux plots de face de deux faces opposées l'une à l'autre. Le second profilé possède également des trous de vissage 342a, 342b et 342c et 342d (ce dernier étant non représenté). Ces trous de vissage sont formés dans deux faces opposées du profilé 341 entre les plots de face 4c et 4d, et 4g et 4h sur l'exemple représenté. Pour assembler le second profilé 341, on vient l'insérer au niveau de la plaque 125 de l'élément d'assemblage qui fait saillie du premier profilé 1 entre son bord supérieur 126 et son bord inférieur 127. Le bord supérieur 126 de la plaque 125 est inséré entre les plots de face 4c et 4d du profilé 341 et le bord inférieur 127 entre les plots de face 4h et 4g. Le profilé 341 vient en butée contre le profilé 1 de sorte que les trous de vissage 342a, 342b, 342c et 342d débouchent respectivement sur les filetages 128a, 128b, 128c et 128d de la plaque 125. On peut alors venir insérer les vis 129a, 129b, 129c et 129d dans les filetages respectifs 128a, 128b, 128c et 128d, à travers les trous de vissage afin de fixer le second profilé 341 au premier profilé 1.

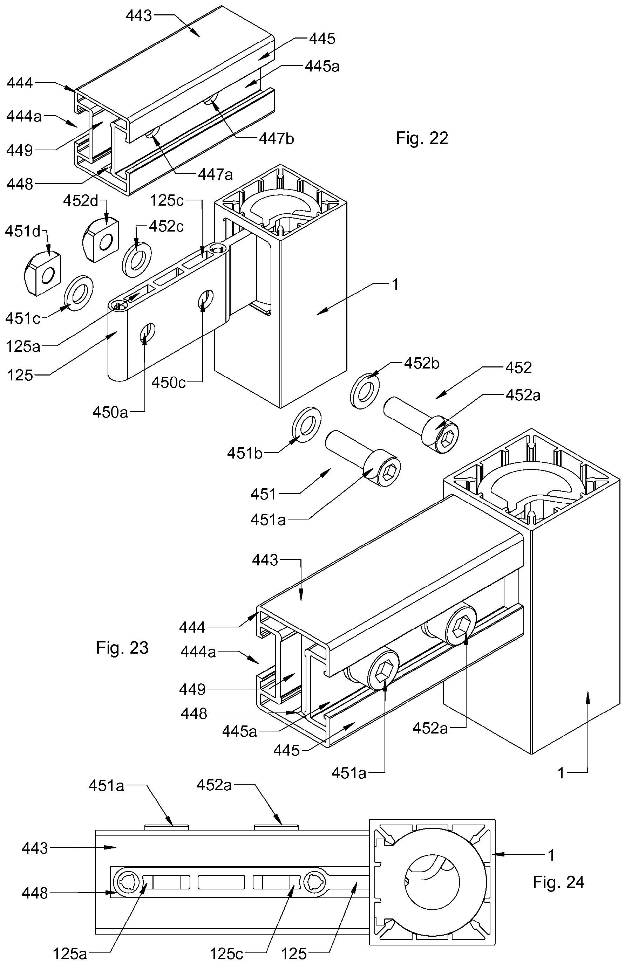

Si l'on se réfère maintenant aux Figures 22 à 27, on peut voir que l'on a représenté le montage d'un deuxième type de second profilé à un premier profilé. Le second profilé 443 est un profilé de section rectangulaire. Sur les faces latérales 444 et 445 du second profilé 443, on a ménagé respectivement des rainures 444a et 445a tout au long du profilé 443. Le second profilé 443 possède des trous de boulonnage 447a et 447b formés dans les rainures. Le profilé possède également une fente 448, ménagée à partir du bord du second profilé qui viendra en contact contre le premier profilé et dont la dimension correspond sensiblement à la dimension de la plaque 125 de la seconde partie de l'élément d'assemblage, sur une face du profilé qui n'a pas de rainure. Le second profilé 443 possède un espace de réception intérieur 449 formé entre les rainures et les deux autres faces du profilé.

Le premier profilé est identique à celui décrit dans les Figures 4a à 4d, et le montage du dispositif d'assemblage dans ce profilé est identique à celui décrit précédemment. La plaque 125 de l'élément d'assemblage possède de plus des trous traversants 450a et 450c effectués dans la plaque 125 à travers les cavités respectivement 125a et 125c de cette dernière.

Afin de monter le second profilé 443, on vient placer celui-ci en butée contre le premier profilé de telle sorte que la fente 448 du second profilé soit au-dessus ou au-dessous de la plaque 125 de l'élément d'assemblage 117. On vient alors faire glisser le second profilé 443 le long du premier profilé 1 de telle sorte que la plaque 125 soit insérée dans l'espace de réception intérieur 449 du second profilé 443. En procédant ainsi, les trous traversants 450a et 450c de la plaque 125 viennent en regard respectivement des trous de boulonnage 447a et 447b du second profilé 443.

On viendra fixer le second profilé 443 à la plaque 125 par boulonnage grâce à des ensembles de boulon 451 et 452. L'ensemble de boulon 451 possède une vis 451a, une rondelle 451b destinée à être placée dans la rainure 445a, une rondelle 451c et un écrou 451d destinés à être placés dans la rainure 444a. Cet ensemble de boulon passera à travers le trou traversant 450a et le trou de boulonnage 447a. De la même manière, l'ensemble de boulon 452 possède une vis 452a, une rondelle 452b destinée à être placée dans la rainure 445a, une rondelle 452c et un écrou 452d destinés à être placés dans la rainure 444a. Cet ensemble de boulon passera à travers le trou traversant 450c et le trou de boulonnage 447b.

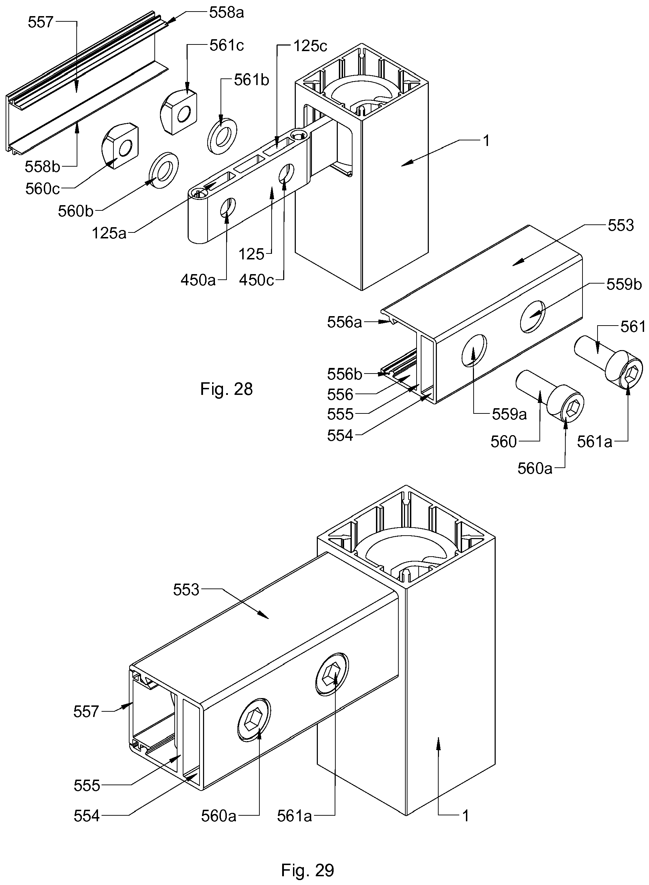

Si l'on se réfère maintenant aux Figures 28 à 32, on peut voir que l'on a représenté le montage d'un troisième type de second profilé à un premier profilé 1. Le second profilé 553 est de section rectangulaire, et possède une cavité interne 554 délimitée par une paroi interne 555. Le second profilé 553 est ouvert sur l'une de ses faces, forme un espace de réception intérieur 556 entre l'ouverture et la paroi interne 555, et possède des butées de clipsage 556a et 556b qui permettront de venir clipser un capot 557 possédant des moyens de clipsage correspondants 558a et 558b. Le second profilé 553 possède également des trous de boulonnage 559a et 559b sur sa face opposée à la face ouverte, ainsi que des trous de boulonnage 559c et 559d en regard des trous de boulonnage 559a et 559b sur la paroi interne 555.

La plaque 125 est identique à celle décrite dans l'exemple précédent, elle possède des trous traversants 450a et 450c au niveau des cavités 125a et 125c de la plaque 125. Le montage du dispositif d'assemblage dans le profilé 1 est identique à celui décrit ci-dessus.

Afin d'assembler le second profilé 553, on vient le placer au niveau de la plaque 125 de telle sorte que la paroi interne 555 du second profilé 553 soit en butée contre la plaque 125, le bord du second profilé 553 étant en butée contre la paroi du premier profilé 1. En faisant ainsi les trous de boulonnage 559a, 559c et 450a ainsi que les trous 559b et 559d et 450c seront alignés. On vient ensuite fixer le second profilé 553 à la plaque 125 par des ensembles de boulon 560 et 561. L'ensemble de boulon 560 possède une vis 560a, une rondelle 560b qui vient en butée contre la plaque 125 à l'opposé de la paroi interne 555, et un écrou 560c qui est contenu dans l'espace de réception intérieur 556. Cet ensemble de boulon 560 passe à travers les trous de boulonnage 559a et 559c, et le trou traversant 450a.

De la même manière, l'ensemble de boulon 561 possède une vis 561a, une rondelle 561b qui vient en butée contre la plaque 125 à l'opposé de la paroi interne 555, et un écrou 561c qui est contenu dans l'espace de réception intérieur 556. Cet ensemble de boulon 561 passe à travers les trous de boulonnage 559b et 559d, et le trou traversant 450c.

Une fois que le second profilé 553 a été fixé à la plaque 125, on peut fermer celui-ci par le capot 557.

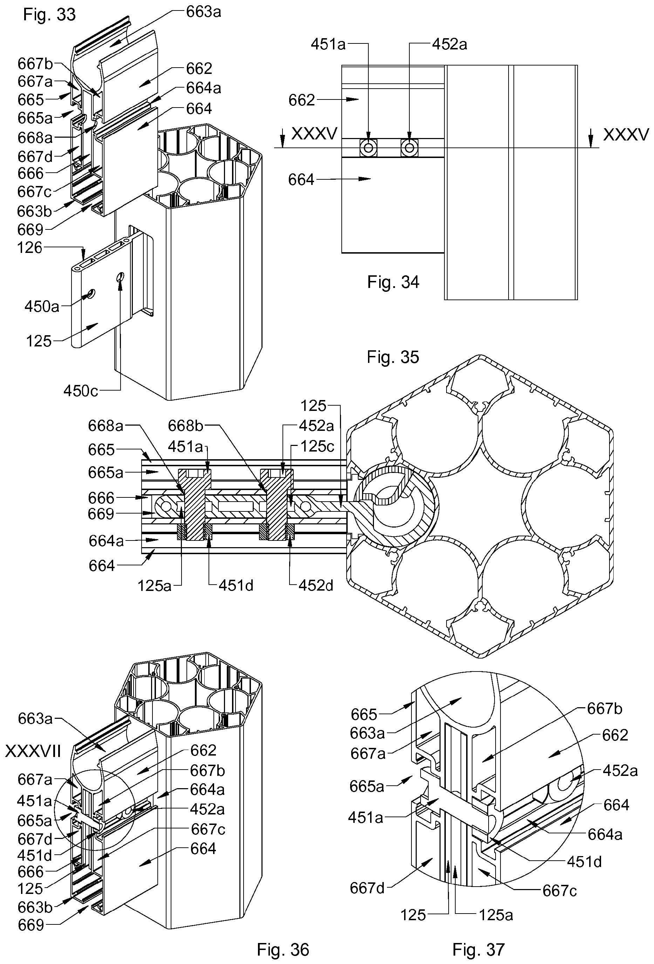

Si l'on se réfère aux Figures 33 à 37, on peut voir que l'on a représenté l'assemblage d'un dispositif d'assemblage avec un premier profilé de section hexagonale et un second profilé selon un autre mode de réalisation.

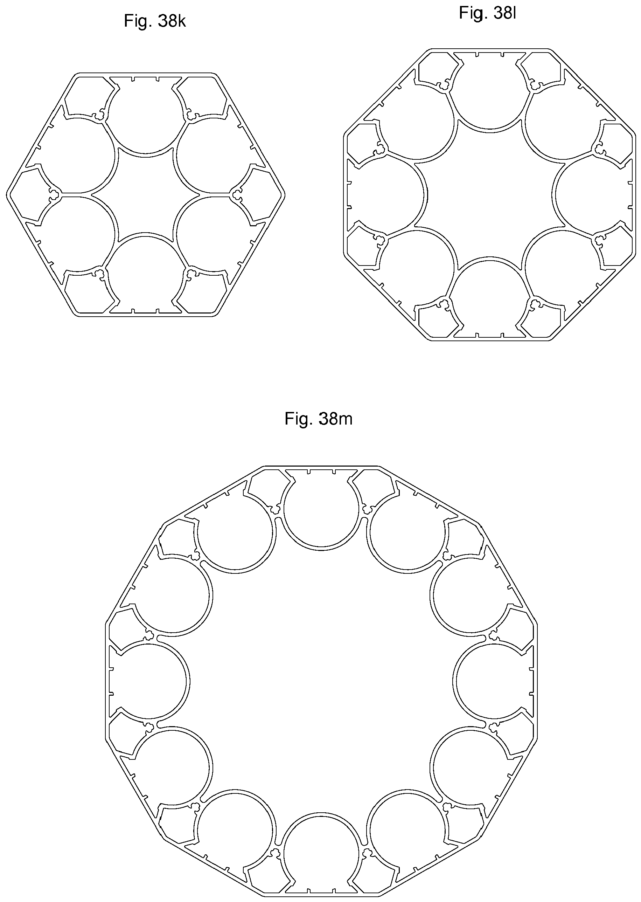

Le premier profilé est de section hexagonale et possède six zones de liaison accolées les unes aux autres. Ce profilé sera décrit ci-après en Figure 38k. L'assemblage du dispositif d'assemblage notamment de la rotule 118 et de la clé 130 dans la zone de liaison est identique aux autres assemblages décrits précédemment. De par la face droite de la zone de liaison, l'entretoise de support utilisée pour bloquer la rotule et la clé dans la zone de liaison sera l'entretoise de support 239 utilisée pour les profilés de section rectangulaire.

Le second profilé sera assemblé à la seconde partie de l'élément d'assemblage par une méthode identique à l'assemblage qui est décrit dans les Figures 22 à 27.

Ainsi le second profilé 662 possède à son extrémité supérieure en position de montage vertical une rainure cylindrique 663a et une seconde extrémité 663b qui reprend la géométrie du profilé 1 dans lequel on aurait ménagé une fente entre les deux plots de face d'une même face, sur deux faces opposées l'une à l'autre. Les deux extrémités sont reliées l'une à l'autre par une zone de section rectangulaire comprenant une première face 664 et une seconde face 665. De la même manière que dans le second profilé 443 décrit dans les Figures 22 à 27, des rainures 664a et 665a sont formées respectivement sur les faces 664 et 665. Un espace de réception intérieur 666 est ménagé dans la zone de section rectangulaire reliant les extrémités 663a et 663b, entre les faces intérieures des rainures 664a et 665a. Quatre cavités 667a, 667b, 667c et 667d sont également formées à l'intérieur de la zone de section rectangulaire entre les extrémités 663a et 663b, les faces 664 et 665 et l'espace de réception intérieur 666 du second profilé 662. De la même manière que dans le second profilé 443 des trous de boulonnage 668a et 668b sont formés dans les rainures de ce profilé.

L'assemblage du second profilé 662 se fera de la même manière que celui du second profilé 443 des Figures 22 à 27. On viendra insérer la plaque 125 dans l'espace de réception intérieur 666 par l'intermédiaire de la fente 669 au niveau de l'extrémité 663b. Le bord supérieur 126 de la plaque 125 viendra en butée contre le fond de la rainure de l'extrémité 663a. Comme dans le cas du second profilé 443 on viendra boulonner la plaque avec les vis 451a et 452a et les écrous respectifs 451d et 452d.

Sur la Figure 37, on peut voir que l'on a représenté une vue en gros plan du détail XXXVII de la Figure 36. Il est représenté sur ces Figures que les vis de boulonnage peuvent être insérées dans n'importe quel sens, l'une pouvant être dans un sens opposé à l'autre.

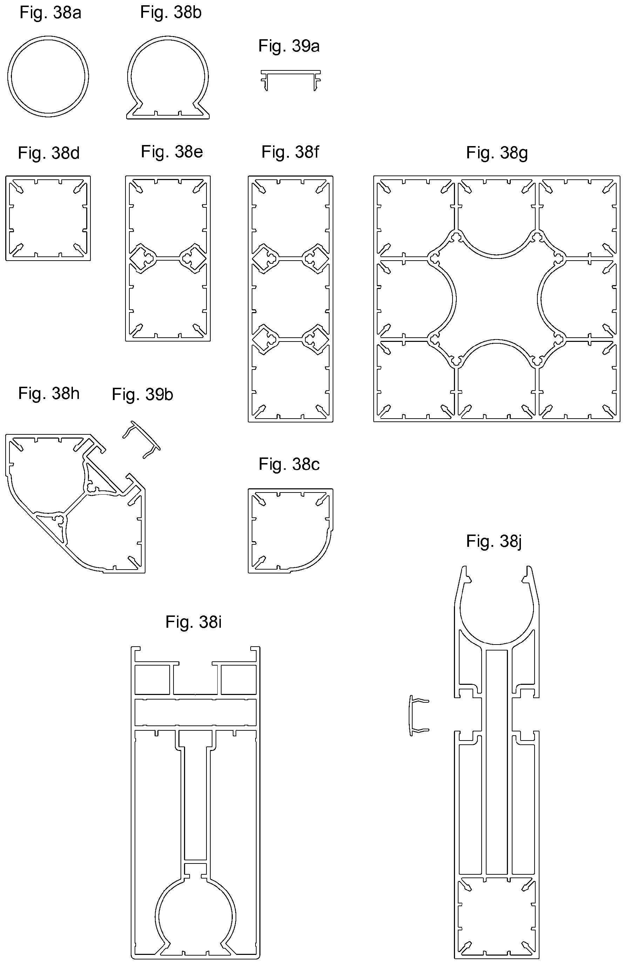

Si l'on se réfère aux Figures 38a à 38m, on peut voir que l'on a représenté des profilés que l'on peut utiliser dans la présente invention comme premier profilé.

Le profilé de la Figure 38a est un premier profilé de section tubulaire cylindrique tel qu'utilisé dans le mode de réalisation décrit dans les Figures 5 à 10. Le profilé de la Figure 38b est un profilé tubulaire sensiblement cylindrique présentant une face droite. La face droite du profilé présente deux plots de face. Ces plots ainsi que la section tubulaire sensiblement cylindrique du profilé permettent de former un espace de réception intérieur de section circulaire.

Le profilé de la Figure 38c est un profilé de section sensiblement rectangulaire ayant des plots d'angle et de face de la même manière que le premier profilé 1 de section rectangulaire utilisé ci-dessus dans les Figures 10 à 14, par exemple. Ce profilé possède deux faces droites identiques au premier profilé 1. Les deux autres faces sont constituées de segments de face droits comme les deux faces droites précédentes qui sont reliés par une section d'arc de cylindre de rayon configuré pour former un espace de réception intérieur de section circulaire comme pour le premier profilé 1.

Le profilé de la Figure 38d est le premier profilé 1.

Les profilés des Figures 38e et 38g sont des profilés de section rectangulaire où au moins deux zones de liaison comme celle de la Figure 38d ont été accolées.

Sur la Figure 38e, on a accolé deux zones de liaison de section rectangulaire. Sur les faces intérieures accolées de chaque profilé, on ne place pas de plots de face comme dans les autres faces. A la place des plots de face, une face d'appui d'arc de cylindre part du plot d'angle pour arriver à l'aplomb du plot de face correspondant de la face opposée. Cet arc de cylindre possède un rayon configuré pour former un espace de réception intérieur de section circulaire. Il y a deux faces d'appui d'arc de cylindre, une pour chaque angle de la face accolée. Les deux faces d'appui de chaque zone de liaison accolée forment une cavité interne. On peut aménager des alvéovis dans ces cavités internes. De la même manière, la Figure 38f illustre un profilé à trois zones de liaison accolées.

On peut également utiliser les profilés des Figures 38d, 38e et 38f comme second profilé tel qu'utilisé dans les Figures 18 à 21, par exemple.

La Figure 38g représente un profilé de section carrée et contenant 8 zones de liaison accolées. Chaque face de ce profilé possède trois zones de liaison. Les zones de liaison d'angle de ce profilé sont accolées à deux zones de liaison de face. Ces zones de liaison d'angle sont identiques aux zones de liaison du profilé de la Figure 38c, à l'exception que les segments de face droit reliés par une section reprenant un arc de cylindre sont plus longs de sorte que la section d'arc de cylindre débute à l'aplomb d'un plot d'angle de la face opposée. Les zones de liaison de face sont constituées d'une face droite donnant sur l'extérieur, de deux faces qui sont communes avec les zones de liaison d'angle, ces deux faces étant reliées par une section reprenant un arc de cylindre de sorte qu'on forme un espace de réception intérieur de section circulaire. Les neuf zones de liaison forment une cavité interne, dans laquelle on peut aménager des alvéovis au niveau des faces communes aux zones de liaison d'angle et de face.

La Figure 38h illustre un profilé possédant deux zones de liaison accolées. Chaque zone de liaison possède une face droite portant des plots d'angle et des plots de face ainsi qu'un segment de face droit ayant un plot d'angle et un plot de face. La partie commune des deux zones de liaison est formée par un segment droit commun à partir duquel part une section d'arc de cylindre à partir de chaque extrémité du segment pour chaque zone de liaison. Les segments de face droits des deux zones de liaison sont reliés par une partie comportant des sections d'arc de cylindre reliées par un segment, les sections d'arc de cylindre permettant de former des espaces de réception intérieurs de section circulaire pour les zones de liaison. Les faces droites sont reliées par une section formant rainure tout au long du profilé. Le profilé possède deux cavités dans lesquelles on peut aménager des alvéovis.

La Figure 38i représente un profilé possédant à une première extrémité, une première zone de liaison identique au profilé de la Figure 38b, à l'exception qu'à l'opposé de la face droite on aménage une rainure dans la section cylindrique. Sur l'autre extrémité du profilé on a disposé une rainure qui est aménagée sur la largeur du profilé. Cette rainure débouche sur une autre rainure de largeur moins importante que la première. En contact avec cette deuxième rainure se trouve une cavité transversale formée sur l'ensemble de la largeur du profilé. La cavité transversale et la rainure débouchant sur la zone de liaison sont reliées par une cavité en forme de T.

Si l'on se réfère à la Figure 38j, on peut voir que l'on a représenté un profilé qu'on a utilisé dans l'exemple du mode de réalisation des Figures 33 à 37.

La Figure 38k est un profilé hexagonal possédant six zones de liaison similaires à celles de la Figure 38b accolées les unes aux autres et qu'on a utilisé dans l'Exemple des Figures 33 à 37. Chaque zone de liaison accolée deux à deux avec sa zone de liaison voisine forme une cavité interne dans laquelle on peut aménager une alvéovis. De la même manière, la Figure 38l est un profilé octogonal possédant huit zones de liaison accolées les unes aux autres et la Figure 38m est un profilé dodécagonal possédant 12 zones de liaison accolées les unes aux autres.

Si l'on se réfère maintenant aux Figures 39a et 39b, on peut voir que l'on a représenté respectivement un cache-rainure et un capot permettant respectivement d'obturer une rainure et/ou de refermer des ouvertures des premier et second profilés. On a, par exemple, utilisé les cache-rainures pour fermer des rainures comme dans les Figures 2a à 2c. On a, par exemple, utilisé les capots pour fermer des ouvertures de premier profilé comme dans les Figures 4c et 4d

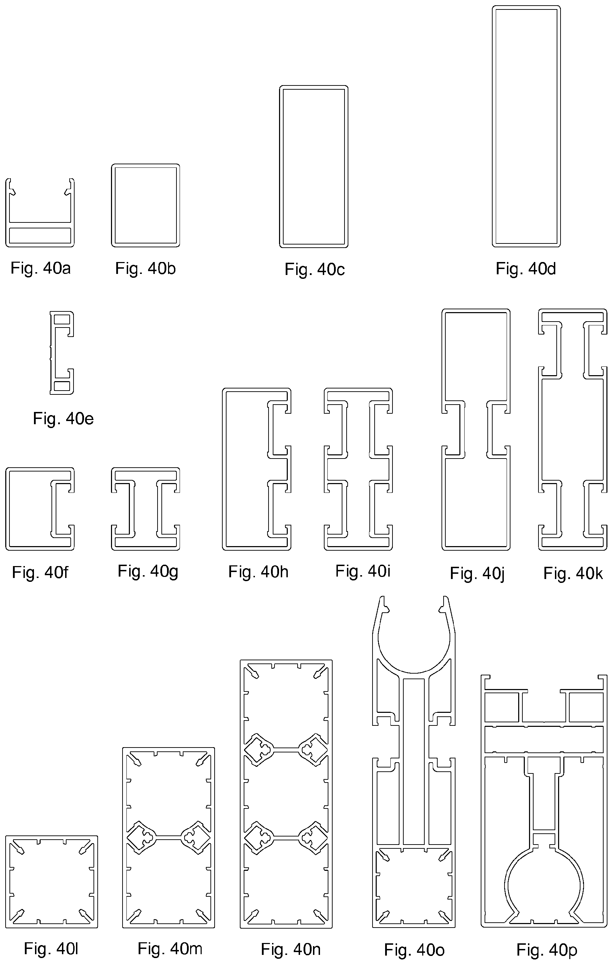

Si l'on se réfère maintenant aux Figures 40a à 40p, on peut voir que l'on a représenté des profilés que l'on peut utiliser dans la présente invention en tant que second profilé.

La Figure 40a représente le profilé utilisé dans les Figures 28 à 31.

Les Figures 40b à 40d représentent des seconds profilés de diverses sections rectangulaires que l'on a utilisé dans les Figures 5 à 9, et 10 à 14.

La Figure 40e représente une section de profilé que l'on a utilisé, par exemple, dans la description de profilés de l'état antérieur de la technique.

Les Figures 40f à 40k représentent des profilés possédant une ou deux rainures sur une face ou deux faces opposées dont l'assemblage sera identique à celui des profilés de l'exemple des Figures 22 à 27. La Figure 40f représente un profilé de section rectangulaire possédant seulement une seule rainure sur l'une de ses faces. La Figure 40g représente le profilé utilisé dans l'exemple des Figures 22 à 27. La Figure 40h représente un profilé de plus grande dimension que celle des Figures 40f et 40g, ce qui permet de former deux rainures sur une seule face. De la même manière, le profilé de le Figure 40i présente des dimensions permettant de former deux rainures sur chacune des faces. La Figure 40j représente un profilé de dimension encore plus importante que les profilés des Figures 40f à 40i, une seule rainure étant formée dans la partie médiane de deux faces longitudinales opposées. De la même manière le profilé de la Figure 40k représente un profilé de grande dimension sur lequel on aura formé une rainure au voisinage de chacune des deux extrémités du profilé sur les deux faces longitudinales opposées.

Les Figures 40l, 40m, 40n, 40o et 40p sont identiques aux Figures respectivement 38d, 38e, 38f, 38j et 38i, étant donné que les profilés qui y sont représentés peuvent servir à la fois comme premier profilé ou comme second profilé dans la présente invention.

Les Exemples suivants illustrent plusieurs structures que l'on peut assembler à l'aide de kits d'assemblage selon la présente invention. Diverses structures pouvant être assemblées, allant de petites structures telles que des meubles à des structures plus importantes comme des ossatures de maison.

Si l'on se réfère aux Figures 41a à 44b, on peut voir que l'on a représenté une table basse dont les différents éléments ont été assemblés à l'aide de kits d'assemblage selon la présente invention.

La table basse TB est une table basse en forme d'hexagone irrégulier comportant une tablette TL inférieure suspendue, de forme rectangulaire. La tablette possède quatre pieds P1, P2, P3 et P4 situés à chaque sommet des grands côtés de l'hexagone irrégulier. La table basse TB possède un plateau supérieur PL qui peut être fabriqué par exemple en verre. La tablette inférieure TL est fixée à quatre montant M1, M2, M3 et M4 qui sont situés aux sommets de l'hexagone irrégulier non occupés par les pieds de la table basse. Le plateau PL est soutenu par les pieds P1, P2, P3 et P4 ainsi que par les traverses qui assemblent entre eux les pieds et les montants de la table basse. A savoir, le pied P1 et le pied P2, le pied P2 et le montant M3, le montant M3 et le montant M4, le montant M4 et le pied P3, le pied P3 et le pied P4, le pied P4 et le montant M1, le montant M1 et le montant M2, et le montant M2 et le pied P1 sont reliés par une traverse, les traverses assemblées au niveau de la partie supérieure des pieds et montants réalisant ainsi le tour de la table basse. La tablette inférieure TL est soutenue par deux traverses, ces traverses reliant le montant M1 au montant M4 et le montant M2 au montant M3. Les traverses soutenant la tablette inférieure TL sont assemblées au niveau de la partie médiane des montants à distance des traverses qui soutiennent le plateau supérieur PL.

L'assemblage des pieds et des montants aux traverses sera effectué par des dispositifs d'assemblage selon la présente invention. Dans cet exemple, les premiers profilés sont utilisés pour les pieds et les montants alors que les seconds profilés sont utilisés pour les traverses de la table basse. Les premiers profilés utilisés seront les profilés 38C de la Figure 38c, alors que les seconds profilés seront les profilés 40C de la Figure 40c pour les traverses situées directement sous le plateau PL de la table basse et les profilés 40B de la Figure 40b pour les traverses situées directement sous la tablette TL de la table basse.

On décrira le montage des pieds notamment par rapport aux Figures 42 et 44a et 44b. Afin de pouvoir assembler les pieds et les traverses avec un angle important de 135°, on va utiliser deux dispositifs d'assemblage qui seront insérés dans le même premier profilé et qui seront chacun liés à une traverse différente. Pour se faire, on pratique une ouverture sur chaque face droite du profilé 38C. Les dispositifs d'assemblage seront identiques à ceux décrits dans les exemples précédents à l'exception que la seconde partie 119' de l'élément d'assemblage 117' sera de hauteur plus grande que celle de la rotule 118. Dans cette configuration, la seconde partie 119' sera prolongée au niveau de l'un de ses bords inférieur ou supérieur. Par exemple, le bord supérieur 126' de la seconde partie 119' restera dans le prolongement de la rotule 118 et le bord inférieur 127' sera prolongé vers le bas. En faisant ainsi la seconde partie 119' de l'élément d'assemblage pourra être entièrement enserrée par les faces latérales des seconds profilés. Cette taille accrue de la seconde partie des éléments d'assemblage permet de positionner deux rotules à proximité l'une de l'autre dans un premier profilé n'ayant qu'une zone de liaison tout en obtenant un alignement des seconds profilés.

On insérera un premier dispositif d'assemblage dans une première ouverture supérieure du premier profilé vu dans la position d'utilisation de la table basse. La rotule sera insérée dans l'espace de réception intérieur de telle sorte que la seconde partie de l'élément d'assemblage sera au voisinage de son angle limite avec un angle complémentaire positif de 22,5° par rapport à une saille de l'élément d'assemblage perpendiculairement à la face du profilé. Le second dispositif d'assemblage sera inséré dans une seconde ouverture au-dessous de la première ouverture et ménagée sur l'autre face droite du premier profilé utilisé. La seconde partie de l'élément d'assemblage sera tournée avec un même angle que le premier dispositif d'assemblage mais dans un sens de rotation opposé, afin de former un angle final plus important entre les seconds profilés soit 135° au lieu de 90° si les éléments d'assemblage faisaient saillie perpendiculairement à la face du profilé. Les seconds profilés seront usinés pour que leurs bords viennent en contact contre le premier profilé en coupant à un angle droit moins 22,5°. Les seconds profilés seront assemblés aux éléments d'assemblage par vissage, seulement sur les faces inférieures des seconds profilés avec les vis 129c et 129d pour d'évidentes raisons esthétiques si le plateau supérieur de la table basse est en verre. Les pieds et montants seront recouverts à leurs extrémités supérieurs par un capot Ca de forme correspondante.

Le montage des autres angles pour les traverses reliant des pieds de la table basse aux montants seront identiques.

Pour le montage des traverses soutenant la tablette inférieure, on pratiquera une troisième ouverture dans les montants M1, M2, M3 et M4 à distance des deux premières ouvertures. Le dispositif d'assemblage utilisé sera un dispositif tel que décrit ci-dessus dans les Figures 10 à 14. On insérera la rotule dans la troisième ouverture afin que l'élément d'assemblage ait un angle complémentaire négatif de 22,5° par rapport à une saillie de ce dernier perpendiculairement à la face du second profilé (Figure 43).

Si l'on se réfère aux Figures 45a à 47b, on peut voir que l'on a représenté une bibliothèque dont les montants et traverses principaux seront assemblés grâce aux kits d'assemblage selon la présente invention.

La bibliothèque B possède quatre montants M10, M11, M12 et M13. La bibliothèque B possède un sommet S et un fond F. Les montants sont reliés à leurs extrémités supérieures au niveau du sommet S de la bibliothèque par des traverses. Les montants sont également reliés au voisinage de leurs extrémités inférieures au niveau du fond F de la bibliothèque par des traverses. Ainsi les montants M10 et M11, M11 et M12, M12 et M13, et M13 et M14 sont reliés par des traverses supérieures et inférieures. La bibliothèque comprend également une pluralité d'étagères.

Les Figures 46, 47a et 47b représentent plus précisément le montage de l'un des montants de la bibliothèque aux traverses inférieures de celle-ci. Le dispositif d'assemblage utilisé sera identique à celui décrit ci-dessus, dans les Figures 10 à 14, par exemple. Le premier profilé, utilisé comme montant, sera le profilé 38H de la Figure 38h. Le second profilé, utilisé comme traverse, sera le profilé 40N de la Figure 40n.

On ménage quatre ouvertures dans le profilé 38H, avec deux ouvertures sur chaque face droite. L'espace entre les ouvertures de chaque face sera tel que l'on pourra utiliser l'espace de réception intérieur des zones de liaison extrêmes du second profilé 40N. C'est-à-dire, on viendra insérer la rotule 118 et la clé 130 de l'élément d'assemblage dans la zone de liaison du profilé 38H de telle sorte que la seconde partie 119 de l'élément d'assemblage se projettera hors du premier profilé perpendiculairement à la face droite de ce dernier. Ensuite on pourra venir insérer le second profilé de la même manière que pour l'exemple des Figures 18 à 21. Le premier dispositif d'assemblage disposé dans l'ouverture supérieure sera introduit dans l'espace de réception supérieur du second profilé, le second dispositif d'assemblage disposé dans la seconde ouverture au-dessous de la première ouverture sera introduit dans l'espace de réception inférieur du second profilé, l'espace de réception médian du second profilé ne recevant pas d'élément d'assemblage dans cette configuration. Le second profilé sera ensuite vissé aux éléments d'assemblage, les vis 129a et 129b étant utilisées pour le vissage à l'élément d'assemblage supérieur, et les vis 129c et 129d pour le visage de l'élément d'assemblage inférieur. Ce double ancrage des traverses inférieures dans les montants d'angle assure une grande rigidité de la liaison de ces traverses.

Le montage des montants aux traverses supérieures de la bibliothèque sera identique au montage des montants aux traverses inférieures à l'exception qu'un seul dispositif d'assemblage sera utilisé par face du premier profilé pour un second profilé ayant une seule zone de liaison (Figure 40l).

Les étagères de la bibliothèque peuvent recouvrir la longueur totale de la bibliothèque et seront alors montées à l'aide des rainures présentes sur les profilés 38H utilisés pour les montants et à l'aide d'éléments d'assemblage connus dans la technique, tel que, par exemple, un système de type taquet avec, sous ces étagères, des supports intermédiaires du type de ceux décrits dans la Figure 40b, fixés sur des montants rainurés du type de ceux décrits dans la Figure 40f, situés à l'arrière de la bibliothèque

D'autres étagères peuvent être aménagées qui ne recouvriront pas la longueur totale de la bibliothèque. Dans ce cas, les étagères peuvent être fixées en partie aux rainures formées sur les montants d'angle, et l'autre partie des étagères sera fixée à des rainures formées dans des montants placés dans la partie arrière de la bibliothèque, par un même système de type taquet. D'autres étagères pourront encore être fixées uniquement par les rainures formées dans les montants arrières de la bibliothèque.

Si l'on se réfère aux Figures 48a à 51b, on peut voir que l'on a représenté une table ronde dont l'assemblage se fait avec des kits d'assemblage selon la présente invention.

La table ronde TR possède un plateau, que l'on peut réaliser en différentes matières, par exemple en verre, ainsi qu'un poteau PT. Le poteau PT possède des traverses à l'extrémité supérieure du poteau qui servent à soutenir le plateau et des traverses à l'extrémité inférieure du poteau qui servent de base.

Le poteau utilisé dans la table ronde est le premier profilé 38L de la Figure 38l. Les Figures 49 à 51 représentent plus particulièrement le montage des traverses soutenant le plateau de la table ronde. Le premier profilé 38L possède huit zones de liaison qui seront toutes utilisées pour assembler une traverse. Les traverses utilisées seront les seconds profilés 40M de la Figure 40m.

Dans cette configuration, les dispositifs d'assemblage seront identiques aux dispositifs d'assemblage utilisés dans l'exemple des Figures 10 à 14, par exemple, à l'exception notamment d'une dimension adaptée à l'espace de réception intérieur du second profilé 40M. En plus de cette adaptation de dimension, la seconde partie 119" de l'élément d'assemblage 117" sera fendue de son extrémité distale jusqu'au niveau de la face d'arrêt 121. Cette fente 170 sera effectuée afin que la toile interne du second profilé puisse passer à travers cette dernière. L'assemblage du dispositif d'assemblage dans chaque zone de liaison du profilé 38L sera identique à l'assemblage décrit dans les Figures 18 à 21. La seconde partie de l'élément d'assemblage sera insérée dans le second profilé 40M, puis assemblée par vissage avec les vis 129a et 129b dans la partie supérieure, et 129c et 129d dans la partie inférieure.

Les traverses supérieures supportant le plateau partent avec un angle de 90°+3°, les traverses inférieures servant de base partent avec un angle de 90°-3°. Ces départs permettent de supporter les charges aux extrémités des traverses. Le profilé 38L est octogonal et permet de réaliser une table appropriée pour huit personnes, par exemple, et il est possible de réaliser d'autres tables de différentes dimensions avec les profilés des Figures 38g, 38k ou 38m.

On va maintenant se référer aux Figures 52a à 79, dans lesquelles on peut voir que l'on a représenté une structure de maison dont les éléments de l'ossature seront en partie assemblés à l'aide des kits d'assemblage de la présente invention.

La maison montrée dans les Figures 52a à 52e et 53 possède une ossature d'éléments en aluminium et une enveloppe extérieure. La maison comprend plusieurs niveaux et des toitures. La maison possède également des éléments de plancher. On va décrire plus particulièrement par la suite le montage de l'angle de plancher A, de l'angle de toiture B et de l'angle de toiture C indiqués sur la Figure 52a.

Si l'on se réfère aux Figures 54 à 65, on peut voir que l'on a représenté l'angle de plancher A de la Figure 52a et les éléments qui le constituent.

L'angle de plancher possède un poteau 38M qui correspond au profilé dodécagonal de la Figure 38m. Il possède également deux traverses horizontales latérales 6621 et 6622 qui sont en fait des profilés du même type que les profilés 662 décrits dans les Figures 33 à 37 dont on reprendra les numéros de référence. Il possède aussi deux traverses horizontales principales 6623 et 6624, qui comme les traverses latérales 6621 et 6622 sont des profilés du même type que les profilés 662 décrits précédemment dont on reprendra les numéros de référence. Les traverses horizontales latérales 6621 et 6622 sont chacune soutenues par un contreventement respectivement 5531 et 5532, lesquels contreventements sont du même type que les profilés 553 décrits dans les Figures 28 à 32. Les traverses horizontales principales sont quant à elles soutenues par un contreventement 40J qui correspond au profilé de la Figure 40j.

Comme on peut le voir sur les Figures 55 et 61, on utilise sept zones de liaison du profilé dodécagonal 38M. Ainsi une zone de liaison sera utilisée pour la liaison de chaque traverse horizontale latérale et de son contreventement associé par des dispositifs d'assemblage de la présente invention. La zone de liaison d'une traverse horizontale latérale sera directement adjacente à la zone de liaison d'une traverse horizontale principale. Les traverses horizontales principales utiliseront une zone de liaison pour l'assemblage avec des dispositifs d'assemblage de la présente invention, et les zones de liaison des traverses horizontales principales seront séparées par une zone de liaison qui servira à assembler le contreventement des traverses horizontales principales à l'aide d'un dispositif d'assemblage de la présente invention. De plus, afin de fixer l'enveloppe à la structure de la maison, on insérera des éléments d'assemblage possédant une rotule et une clé identiques aux éléments d'assemblage décrits ci-dessus mais dont la seconde partie sera un élément de liaison EL que l'on pourra utiliser pour la liaison à l'enveloppe de la structure de maison. Ces éléments seront insérés dans les zones de liaison qui font directement face aux zones de liaison occupées par les dispositifs d'assemblage pour les traverses horizontales principales.

On va maintenant décrire l'assemblage des traverses horizontales principales. On insère d'abord un dispositif d'assemblage selon la présente invention dans deux zones de liaison du profilé 38M séparées par une zone de liaison. La rotule de chaque élément d'assemblage sera disposée de telle sorte que la seconde partie des éléments d'assemblage viendra en butée contre les toiles de l'ouverture de chaque zone de liaison du côté adjacent à la zone de liaison entre les deux zones de liaison des traverses horizontales principales. Comme on peut le voir sur la Figure 62, les plaques 125 de la seconde partie de l'élément d'assemblage ont deux trous traversants supplémentaires par rapport à la plaque utilisée, par exemple, dans les Figures 33 à 37. Les trous traversants sont toujours pratiqués au niveau des cavités 125a et 125c de la plaque. Les traverses 6623 et 6624 sont usinées afin de former un biseau à leur extrémité destinée à venir en contact contre le profilé 38M. Pour des raisons de montage afin que l'extrémité en biseau de chaque traverse horizontale principale soit entièrement en contact avec la facette du montant 38M, la plaque 125 des éléments d'assemblage sera insérée dans la cavité 667c de la traverse 6623 et dans la cavité 667d de la traverse 6624. On viendra ensuite fixer par boulonnage les éléments d'assemblage et les traverses, à travers leurs trous traversants. Les têtes de vis de ces ensembles de boulonnage seront situées dans l'espace de réception 666 des traverses 6623 et 6624.

Les traverses 6623 et 6624 seront soutenues par un contreventement 40J similaire au profilé 443, à l'exception de sa dimension supérieure et de l'absence de fente, mais dont les autres éléments sont identiques et dont on reprendra les numéros de référence. On viendra insérer un dispositif d'assemblage dans la zone de liaison intermédiaire entre les zones de liaison pour les traverses 6623 et 6624 à la position telle que représentée sur la Figure 62. Ce dispositif d'assemblage possède une plaque 125' dont l'axe longitudinal forme un angle aigu avec l'axe du cylindre formé par la clé et la rotule du dispositif d'assemblage, tel que représenté en Figure 17c. Cette plaque 125' possède deux trous traversants de la même manière que les trous traversants des plaques précédemment décrites, par exemple dans les Figures 22 à 27. Le contreventement 40J est ouvert à ses extrémités. La plaque 125' sera insérée dans l'espace de réception intérieur 449 du contreventement et ils seront ensuite fixés par boulonnage de la même manière que pour l'exemple des Figures 22 à 27.

Afin d'assurer de bonnes propriétés mécaniques, les traverses horizontales principales 6623 et 6624 et le contreventement 40J seront assemblés à l'aide d'une platine de blocage 771. Cette platine 771 possède une butée 772 en forme de biseau située à l'intérieur d'une rainure 773 située sous la platine. La platine 771 possède deux trous traversants filetés 774a et 774b le long de son épaisseur qui permettent de venir fixer la butée 772 à la platine à l'aide des vis 775a et 775b. La platine de blocage possède quatre trous filetés régulièrement répartis tout au long de sa longueur sur chacun de ses côtés 776 et 777. Ce sont les trous filetés 776a, 776b, 776c et 776d sur le côté 776 ainsi que les trous correspondants sur l'autre côté 777, 777a, 777b, 777c (non représentés) et 777d. La platine sera d'une dimension telle qu'elle pourra être insérée entre les traverses 6623 et 6624 dans leurs rainures. Ainsi le côté 776 sera inséré dans la rainure 665a de la traverse 6624 et le côté 777 sera inséré dans la rainure 664a de la traverse 6623. La platine sera vissée à l'aide des vis 778a, 778b, 778c et 778d dans les trous respectivement 776a, 776b, 776c et 776d, et des vis 779a, 779b (non représentée), 779c (non représentée) et 779d dans les trous respectivement 777a, 777b, 777c et 777d. L'extrémité du contreventement 40J qui viendra en butée contre la platine 771 sera usinée pour former un biseau. L'extrémité biseautée du contreventement 40J viendra se loger dans la rainure 773 de la platine 771 et la face inférieure du contreventement 40J viendra s'appuyer contre la butée 772 de la platine 771, tel que représenté sur la Figure 58 et la Figure 60. On pourra venir insérer des cales 880 et 881 rigides ou semi-rigides respectivement entre la butée 772 et la face inférieure du contreventement 40J et entre la rainure 773 et l'extrémité biseautée du contreventement 40J, tel que représenté sur la Figure 60. Ces cales permettent de supporter les charges appliquées sur les traverses horizontales principales et de supprimer les jeux entre le contreventement, la platine et la butée.

On va maintenant décrire l'assemblage des traverses horizontales latérales 6621 et 6622. Pour l'assemblage de la traverse 6621, on viendra insérer un dispositif d'assemblage dans la zone de liaison voisine à celle qui reçoit la traverse 6623. La rotule sera insérée de telle sorte que la seconde partie de l'élément d'assemblage faisant saillie de l'ouverture du profilé sera perpendiculaire à la face du profilé (Figure 62). La seconde partie de l'élément d'assemblage sera introduite dans l'espace de réception intérieur 666 de la traverse 6621 tel que décrit précédemment.

La traverse 6621 possède à son extrémité 663b un espace de réception intérieur du même type que ceux que l'on peut retrouver dans les premiers profilés 1. On pourra donc insérer dans cet espace un autre dispositif d'assemblage selon la présente invention, notamment un élément d'assemblage dont la plaque 125' forme un angle aigu avec l'axe du cylindre formé par la rotule et la clé. On insère également un élément d'assemblage identique dans la même zone de liaison du profilé 38M tel que représenté sur la Figure 62. Avec ces deux éléments d'assemblage sur la traverse horizontale latérale 6621 et le poteau 38M, on pourra venir assembler le contreventement 5531.

Le contreventement 5531 est un second profilé du type du second profilé 553 décrit dans l'exemple en rapport avec les Figures 28 à 32. Les deux extrémités de ce profilé seront usinées pour former des biseaux qui viendront en contact avec la traverse 6621 et le profilé 38M (Figure 63). On viendra donc insérer le contreventement 5531 au niveau des plaques 125' des éléments d'assemblage portés par la traverse 6621 et le poteau 38M. Le contreventement 5531 sera ensuite fixé par vissage, puis l'ouverture du contreventement sera obturée par un capot, tel que décrit précédemment pour le second profilé 553.

L'assemblage de la traverse horizontale latérale 6622 et de son contreventement 5532 se fera de la même manière que pour la traverse 6621 et le contreventement 5531.

Si l'on se réfère aux Figures 66 à 72, on peut voir que l'on a représenté l'angle de toiture B de la Figure 52a et les éléments qui le constituent qui seront identiques à ceux de l'angle de plancher à l'exception de leurs différents angles entre eux.

L'angle de toiture possède un poteau 38M qui correspond au profilé dodécagonal de la Figure 38m. Il possède également deux traverses latérales 6621' et 6622' qui sont du même type que les profilés 662 décrits dans les Figures 33 à 37. Il possède aussi deux traverses horizontales 6623 et 6624, identiques aux traverses de l'angle de plancher et soutenues par le même contreventement 40J.

L'assemblage des traverses horizontales 6623 et 6624 de l'angle de toiture est identique à celui décrit ci-dessus pour l'angle de plancher.

Les traverses latérales 6621' et 6622' sont du même type que les traverses 6621 et 6622 de l'angle de plancher. Afin de suivre la pente de la toiture, on utilise comme dispositif d'assemblage pour monter les traverses latérales sur le poteau, un dispositif d'assemblage dont un élément d'assemblage a une plaque 125" comme dans la Figure 17e. En faisant ainsi, et en usinant l'extrémité de la traverse destinée à venir en contact avec le poteau pour obtenir une extrémité biseautée, on obtiendra une traverse latérale qui suivra la pente de la toiture. Comme il y a moins de charge pour une toiture, il n'y a pas besoin d'utiliser des contreventements pour les traverses latérales. Le reste du montage des traverses 6621' et 6622' sera identique au montage des traverses 6621 et 6622 de l'angle de plancher.

Si l'on se réfère aux Figures 73 à 79, on peut voir que l'on a représenté l'angle de toiture C de la Figure 52a et les éléments qui le constituent.

L'angle de toiture C est constitué d'un poteau central ainsi que de six poteaux périphériques. Les poteaux sont tous un profilé dodécagonal 38M de la Figure 38m. Les six poteaux périphériques forment un hexagone régulier dont chaque poteau occupe un sommet. Le poteau central occupe le centre de l'hexagone formé par les poteaux périphériques. Les poteaux périphériques sont reliés l'un à l'autre par une traverse horizontale. Le poteau central est relié à chacun des poteaux périphériques à deux reprises. A son extrémité supérieure le poteau central est relié à chaque poteau périphérique par deux traverses inclinées. L'extrémité supérieure des poteaux périphériques est biseautée afin d'être alignée avec les traverses inclinées. A son extrémité inférieure, le poteau central est relié à chaque poteau périphérique par deux traverses horizontales.

Les traverses reliant les poteaux périphériques entre eux sont du même type que les profilés 662 utilisés dans l'exemple représenté dans les Figures 33 à 37. Les extrémités sont usinées pour former un biseau qui viendra en contact avec la paroi de chaque poteau périphérique. Le montage avec le dispositif d'assemblage selon la présente invention est similaire à ceux décrits ci-dessus.

Les traverses inclinées reliant les poteaux périphériques au sommet du poteau central sont du même type que les profilés 662 également. Les extrémités sont usinées pour former un biseau qui viendra en contact avec la paroi de chaque poteau périphérique. Le montage avec le dispositif d'assemblage sera similaire à ceux décrits ci-dessus, notamment avec des éléments d'assemblage ayant une plaque 125' pour le départ du poteau périphérique ou 125" pour le départ du poteau central.

Les traverses horizontales reliant les poteaux périphériques à la base du poteau central sont les profilés 40J de la Figure 40j. Le montage avec le dispositif d'assemblage selon la présente invention est similaire à ceux décrits ci-dessus.

Chaque poteau périphérique est doté d'une entretoise ET de type tube cylindrique qui permettra à ce que la toiture formée par l'ensemble de l'angle de toiture C soit assemblée au niveau directement au-dessous de la toiture de la structure de maison.

## Revendications

1. - Kit d'assemblage de profilés, comprenant au moins un premier profilé, au moins un second profilé destiné à s'étendre perpendiculairement ou selon un angle par rapport à un premier profilé et au moins un élément d'assemblage (117) présentant une première partie (118) configurée pour être reçue en position d'assemblage dans un premier espace de réception (2 ; 113) défini dans un premier profilé (1 ; 110), et une seconde partie (119) s'étendant à partir de la première partie (118) de façon à faire saillie hors dudit premier profilé (1 ; 110) avec l'élément d'assemblage (117) en position d'assemblage, laquelle seconde partie (119) est configurée pour être reçue dans un second espace de réception (114 ; 449 ; 556) défini à l'extrémité du second profilé (111 ; 237 ; 341 ; 443 ; 553), étant prévus des premiers et seconds moyens de blocage pour bloquer en position respectivement lesdites première et seconde parties dans respectivement lesdits premier et second espaces de réception,
le kit d'assemblage étant **caractérisé par le fait que** :
- la première partie (118), dite rotule, de l'élément d'assemblage (117) a une surface externe (120) suivant un arc de cylindre, dont une première extrémité, au voisinage de laquelle s'étend la seconde partie (119) de l'élément d'assemblage (117), et une seconde extrémité présentent respectivement une première (121) et une seconde (122) face d'arrêt rentrante formant un angle avec ladite surface externe (120), et
- les premiers moyens de blocage comprennent :
- une pièce (130), dite clé, ayant une surface externe (131) suivant un arc de cylindre de même rayon que ou d'un rayon inférieur à celui suivi par la surface externe (120) de ladite rotule (118), et des première (132) et seconde (133) faces d'appui rentrantes, respectivement à chaque extrémité de ladite surface externe (131) de la clé (130), la clé (130) étant configurée pour être apte à se placer, en position d'assemblage, dans l'intervalle formé entre les première (121) et seconde (122) faces d'arrêt de ladite première partie, avec les première (132) et seconde (133) faces d'appui de la clé (130) en contact avec ces dernières ; et
- des moyens d'immobilisation de la clé (130) en position d'assemblage,
ce par quoi l'élément d'assemblage (117) est apte à assembler audit second profilé (111 ; 237 ; 341 ; 443 ; 553) ledit premier profilé (1 ; 110) avec le premier espace de réception (2 ; 113) de ce dernier qui délimite un espace cylindrique recevant, en position d'assemblage, la rotule (118) de l'élément d'assemblage (117) et la clé (130), ledit espace cylindrique étant tel que les surfaces externes (120 ; 131) de ladite rotule (118) et de ladite clé (130) sont aptes à être guidées en rotation dans celui-ci, le premier profilé (1 ; 110) présentant une ouverture (5 ; 112) débouchant dans ledit premier espace de réception (2 ; 113) et par laquelle la seconde partie (119) de l'élément d'assemblage (117) s'étend hors dudit premier profilé (1 ; 110) pour être insérée dans ledit second profilé (111 ; 237 ; 341 ; 443 ; 553).

2. - Kit d'assemblage selon la revendication 1, **caractérisé par le fait que** le premier profilé (110) est un profilé cylindrique qui délimite l'espace cylindrique de réception (113) de la rotule (118) et de la clé (130), et dans la paroi cylindrique duquel est formée l'ouverture (112) par laquelle la seconde partie (119) de l'élément d'assemblage (117) s'étend hors dudit premier profilé (110), les dimensions de l'ouverture (112) étant telles que l'élément d'assemblage (117) puisse être introduit à travers celle-ci dans l'espace cylindrique de réception (113) et ne puisse plus en être extrait une fois réalisé son assemblage avec la clé (130) dans ledit espace (113), les bordures de l'ouverture (112) perpendiculaires à la ligne longitudinale moyenne de l'espace cylindrique de réception (113) assurant avantageusement la mise en butée de l'élément d'assemblage (117) dans sa position de montage.

3. - Kit d'assemblage selon la revendication 1, **caractérisé par le fait que** le premier profilé (1) comporte des plots longitudinaux (3a, 3b, 3c, 3d, 4a, 4b, 4c, 4d, 4e, 4f, 4g, 4h) qui sont répartis sur sa paroi intérieure et dont les bordures libres sont contenues dans une enveloppe cylindrique constituant l'espace cylindrique de réception de la rotule (118) et de la clé (130), l'écartement entre les deux plots (3a, 3d) situés de part et d'autre de l'ouverture (5) étant tel que l'élément d'assemblage (117) puisse être introduit à travers ceux-ci dans l'espace cylindrique de réception et ne puisse plus en être extrait une fois réalisé son assemblage avec la clé (130) dans ledit espace, les bordures de l'ouverture (5) perpendiculaires à la ligne longitudinale moyenne de l'espace cylindrique de réception assurant avantageusement la mise en butée de l'élément d'assemblage (117) dans sa position de montage.

4. - Kit d'assemblage selon l'une des revendications 1 à 3, **caractérisé par le fait que** les moyens d'immobilisation sont des moyens de serrage configurés pour, en position d'assemblage, appliquer sur la clé (130) une contrainte de mise en pression de cette dernière contre l'intérieur de l'espace de réception (2 ; 113) du premier profilé (1 ; 110).

5. - Kit d'assemblage selon la revendication 4, **caractérisé par le fait que** les moyens de serrage comprennent au moins une vis (124a ; 124b) placée dans un trou traversant (123a ; 123b) respectif ménagé dans la rotule (118) de l'élément d'assemblage (117) au voisinage de ladite première extrémité, la clé (130) présentant une troisième face d'appui (134) qui, en position d'utilisation, est en regard dudit trou traversant (123a ; 123b) et sur laquelle la au moins une vis (124a ; 124b) applique la contrainte de mise en pression.

6. - Kit d'assemblage selon l'une des revendications 1 à 5, **caractérisé par le fait qu'**il comprend de plus des moyens de maintien de la clé (130) en position lorsque l'on vient l'assembler avec l'élément d'assemblage (117) dans l'espace de réception intérieur (2 ; 113) du premier profilé (1 ; 110).

7. - Dispositif d'assemblage (109) selon la revendication 6, **caractérisé par le fait que** les moyens de maintien de la clé (130) en position comprennent une entretoise (135 ; 239) configurée pour être reçue à l'intérieur de l'espace de réception (2 ; 111) du premier profilé (1 ; 110) et ayant une patte (136 ; 240) apte à venir en appui sur le bord de l'ouverture (5 ; 112) du premier profilé (1 ; 110).

8. - Kit d'assemblage selon la revendication 7, **caractérisé par le fait que** l'entretoise (135 ; 239) est en forme de disque dont le rayon correspond au rayon de la section circulaire de l'espace de réception intérieur (2 ; 113) du premier profilé (1 ; 110).

9. - Kit d'assemblage selon l'une des revendications 1 à 8, **caractérisé par le fait que** la rotule (118) de l'élément d'assemblage (117) est un secteur de tube cylindrique comprenant un retour, de préférence radial, constituant la seconde face d'arrêt (122) de ladite rotule (118).

10. - Kit d'assemblage selon l'une des revendications 1 à 8, **caractérisé par le fait que** la ligne longitudinale moyenne de la seconde partie (119) de l'élément d'assemblage (117) est perpendiculaire à l'axe de l'arc de cylindre de la rotule (118) de l'élément d'assemblage (117).

11. - Kit d'assemblage selon l'une des revendications 1 à 8, **caractérisé par le fait que** la ligne longitudinale moyenne de la seconde partie (119) de l'élément d'assemblage (117) forme un angle non droit avec l'axe de l'arc de cylindre de la rotule (118) de l'élément d'assemblage (117).

12. - Structure, en particulier pour un bâtiment, un meuble, une ossature de support, **caractérisée par le fait qu'**elle comprend une pluralité de kits d'assemblage selon l'une des revendications 1 à 11, à l'état assemblé.
